(19) Europäisches Patentamt
European Patent Office
Office européen des brevets

(11) **EP 0 902 414 B1**

(12) **EUROPÄISCHE PATENTSCHRIFT**

(45) Veröffentlichungstag und Bekanntmachung des Hinweises auf die Patenterteilung:
**22.10.2003 Patentblatt 2003/43**

(51) Int Cl.7: **G10L 21/02**

(21) Anmeldenummer: **98115183.0**

(22) Anmeldetag: **12.08.1998**

(54) **Ansagesystem und Verfahren zum Steuern desselben**

Announcement system and method for driving it

Système et méthode de commande d'un système de diffusion d'annonces

(84) Benannte Vertragsstaaten:
**DE FR GB IT**

(30) Priorität: **12.09.1997 DE 19740217**

(43) Veröffentlichungstag der Anmeldung:
**17.03.1999 Patentblatt 1999/11**

(73) Patentinhaber: **SIEMENS AKTIENGESELLSCHAFT**
**80333 München (DE)**

(72) Erfinder: **Lucioni, Gonzalo, Dr.-Ing.**
**58454 Witten (DE)**

(56) Entgegenhaltungen:
EP-A- 0 522 725    EP-A- 0 736 995
US-A- 4 914 692    US-A- 5 125 024
US-A- 5 548 681

**Beschreibung**

Spracherkennungssysteme ermöglichen es, benutzerfreundliche Dienste über öffentliche Kommunikationsnetze anzubieten. So kann ein Benutzer eines sprachgesteuerten Ansagesystems über seine Spracheingabe beispielsweise Informationen abfragen, die in dem Ansagesystem gespeichert sind. Ferner kann er Transaktionen, z.B. Geldüberweisungen oder Bestellungen ausführen. Zwischen dem Benutzer und dem Ansagesystem findet dabei eine Mensch-Maschine-Kommunikation statt, die sich für den Benutzer um so bequemer und effektiver gestaltet, je besser sie in ihrem Ablauf einer Mensch-Mensch-Kommunikation angenähert ist. Eine Kommunikation zwischen Menschen zeichnet sich bekanntlich unter anderem dadurch aus, daß der eine Gesprächspartner auf die Information des anderen gezielt antwortet. Darüber hinaus spricht bei einer Mensch-Mensch-Kommunikation in der Regel nur ein Gesprächspartner, so daß der andere das Gesagte registrieren kann.

Bei Informationsdiensten, die von sprachgesteuerten Ansagesystemen angeboten werden, sind die über die Ansage zu vermittelnden Informationen in einer Art Baumstruktur organisiert. Um die gewünschte Information zu erhalten, antwortet der Benutzer mit seiner Spracheingabe auf eine erste Ansage des Ansagesystems. In Abhängigkeit der Spracheingabe des Benutzers wählt das Ansagesystem die nächste Ansage aus einem sogenannten Ansage-Menü aus, das die Baumstruktur der gespeicherten Information wiederspiegelt. Der Benutzer kommuniziert mit gezielten Spracheingaben als Antwort auf die Ansagen des Ansage-Menüs solange mit dem Ansagesystem, bis dieses ihm die gewünschte Information liefert. Auf diese Weise kann die Zeit, die benötigt wird, um die gewünschte Information von dem Ansagesystem zu erhalten, vergleichsweise kurz gehalten werden.

Bei bekannten Ansagesystemen stellt es sich jedoch als Nachteil dar, daß der Benutzer bis zum Ende der jeweiligen Ansage warten muß, bis er die Spracheingabe und so die gewünschte Wahl innerhalb des Ansage-Menüs vornehmen darf, da das Ansagesystem mit der Ansage fortfährt, ohne die Spracheingabe des Benutzers zu registrieren. Bei gleichzeitig auftretender Ansage und Spracheingabe, auch "double talking" genannt, geht so ein Teil der von dem Benutzer aufgesprochenen Sprachinformation verloren, so daß die Kommunikation zwischen Benutzer und Ansagesystem gestört ist. Ferner ist die Spracheingabe unter "double talking"-Bedingungen in der Regel mit einem Ansageecho behaftet durch das unter Umständen bis zur Unkenntlichkeit verfälscht sein kann.

Die oben erläuterten Kommunikationsstörungen treten bei bekannten Ansagesystemen häufig auf. So geht aus einem Feldversuch, wiedergegeben in "A voice-activated telephone exchange system and its field trial", S. Yamamoto, K. Takeda, N. Inone, S. Kuroiwa, M. Naitoh, Proceedings of 2nd IEEE Workshop on Interactive Voice Technology for Telecommunications Applications, Kyoto, Japan 26-27 Sept. 1994, Seiten 21 bis 26, hervor, daß über 60 % der Benutzer bereits vor dem Ende der Ansage mit dem Sprechen begonnen haben. In dem eben genannten Versuch wird ferner berichtet, daß die Spracheingabe bereits eine Sekunde nach Beginn der ersten Ansage des Ansagesystems erfolgen kann, so daß der Spracheingabe schon ab diesem Zeitpunkt das Ansageecho überlagert ist.

Aus der US-Offenlegungsschrift US-A-5548681 ist ein Verfahren zum Steuern eines Ansagesystems bekannt, bei dem durch ein Lautsprecher eine Ansage erzeugt wird. Des weiteren wird ein Kompensationssignal, durch das ein in einem Spracheingabesignal enthaltenes Ansageecho (background noise) nachgebildet wird, in einem adaptiven Filter ermittelt, dessen Filterkoeffizienten kontinuierlich adaptiert werden. Durch eine Spracherkennungseinrichtung wird daraufhin im wesentlichen ein Differenzsignal aus Spracheingabesignal und Kompensationssignal verarbeitet.

Es ist Aufgabe der Erfindung, ein Verfahren zum Steuern eines Ansagesystems und ein Ansagesystem selbst anzugeben, das verschiedene Betriebszustände des Ansagesystems erfasst und abhängig von den Betriebszuständen eine optimale Spracherkennung gewährleistet.

Die Erfindung löst diese Aufgabe wie in den Ansprüchen 1-12 beansprucht durch ein Verfahren, bei dem durch eine Ansageeinrichtung eine Ansage in Form eines digitalen Ansagesignals erzeugt wird. Es wird eine zeitliche Überlagerung der Ansage und einer Spracheingabe erfaßt. Ein Kompensationssignal, durch das ein in einem digitalen Spracheingabesignal enthaltenes Ansageecho nachgebildet wird, wird in einem adaptiven, digitalen Echounterdrückungsfilter ermittelt, dessen Filterkoeffizienten in einem Zeitintervall adaptiert werden, in dem die Ansage im wesentlichen allein auftritt. Ein Differenzsignal aus Spracheingabesignal und Kompensationssignal wird von einer Spracherkennungseinrichtung verarbeitet.

Da bei dem erfindungsgemäßen Verfahren ein gleichzeitiges Auftreten von Ansage und Spracheingabe erfaßt wird, kann das Ansagesystem in unterschiedliche Betriebszustände versetzt werden, die sich daran orientieren, ob das Ansagesystem gerade unter "double talking"-Bedingungen betrieben wird oder nicht. Da die Filterkoeffizienten des zur Echokompensation verwendeten adaptiven Echounterdrückungsfilters in einem Zeitintervall adaptiert werden, in dem die Ansage im wesentlichen allein auftritt, können die Filterkoeffizienten schnell und zuverlässig dem Ansagesignal angepaßt werden. Die Koeffizientenadaption wird bei dem beschriebenen Verfahren insbesondere nicht durch die Spracheingabe erschwert, da bis zu Beginn der Spracheingabe die Anpassung der Filterkoeffizienten im wesentlichen abgeschlossen ist. Der Spracherkennungseinrichtung steht zu jedem Zeitpunkt das Differenzsignal zur Verfügung, welches durch das von dem Ansageecho befreite Spracheingabesignal gegeben ist und die relevante Sprachinformation enthält.

Besonders günstig ist es, die Adaption der Filterkoeffizienten zu beenden, wenn eine zeitliche Überlagerung von Ansage und Spracheingabe erfaßt wird. Die Koeffizientenadaption kann mit dieser Maßnahme zeitlich an die Überwachung der "double talking"-Bedingungen gekoppelt werden, so daß der Zeitpunkt, zu dem die Anpassung der Filterkoeffizienten beendet wird, automatisch festgelegt ist. Dies erhöht die Flexibilität der Echokompensation in dem Ansagesystem.

Wird die Adaption der Filterkoeffizienten nach einem Verfahren zur Minimierung der mittleren Fehlerquadrate durchgeführt, so kann der benötigte Rechenaufwand vergleichsweise gering gehalten werden. Ein solches Verfahren wird auch als "least-mean-square-Verfahren", kurz LMS-Verfahren, bezeichnet. Bei dem LMS-Verfahren wird der Satz von Filterkoeffizienten so angepaßt, daß im wesentlichen der mittlere quadratische Fehler von dem Echounterdrückungsfilter ermittelten Kompensationssignals gegenüber dem Spracheingabesignal minimiert wird, das bei nicht vorhandener Spracheingabe allein aus dem Ansageecho besteht. Wie oben erwähnt, zeichnet sich das LMS-Verfahren gegenüber anderen Verfahren, wie etwa dem Newton-Verfahren oder dem "recursivleast-square-Verfahren", kurz RLS-Verfahren, durch einen geringen Realisierungsaufwand aus. Dies ist besonders von Vorteil, wenn die Koeffizientenadaption schaltungstechnisch durch anwendungsspezifische integrierte Schaltkreise, kurz ASICs, umgesetzt wird.

Vorteilhaft wird die zeitliche Überlagerung von Ansage und Spracheingabe durch eine Detektoreinrichtung erfaßt, der das Ansagesignal und das Spracheingabesignal zugeführt werden und die ein Detektorsignal erzeugt. Das Detektorsignal zeigt mit seinen beiden Binärwerten an, ob die Ansage und die Spracheingabe gleichzeitig erfolgen oder nicht. Durch das Detektorsignal können weitere Komponenten des Ansagesystems angesteuert werden, deren Funktionsweise von der gerade vorliegenden Betriebsbedingung abhängt.

In einer weiteren Ausgestaltung der Erfindung wird das Echounterdrückungsfilter durch das Detektorsignal angesteuert, und das Kompensationssignal und das Spracheingabesignal werden einem Additionsglied zugeführt, welches das Differenzsignal ermittelt und dieses an die Spracherkennungseinrichtung und an das Echounterdrückungsfilter abgibt. An Hand des in dem Additionsglied ermittelten Differenzsignals wird die Koeffizientenadaption nach dem LMS-Verfahren durchgeführt, so lange die Ansage allein auftritt. Liegen in dem Ansagesystem "double talking"-Bedingungen vor, so wird dies dem Echounterdrückungsfilter durch das Detektorsignal mit einem entsprechenden Binärwert angezeigt, und die Anpassung der Filterkoeffizienten wird beendet. Ab diesem Zeitpunkt erzeugt das Echounterdrükkungsfilter das Kompensationssignal entsprechend den angepaßten Filterkoeffizienten. Durch das Kompensationssignal ist im weiteren Verlauf der zwischen dem Benutzer und dem Ansagesystem ablaufenden Kommunikation eine zuverlässige Nachbildung des Ansageechos gegeben.

Es kann dem Ansagesystem ermöglicht werden, eine Spracheingabe des Benutzers während einer Ansage zu registrieren, indem das Ansagesignal gedämpft wird, wenn eine zeitliche Überlagerung von Ansage und Spracheingabe festgestellt wird. Durch das Dämpfen des Ansagesignals wird die Lautstärke der Ansage verringert. Der Benutzer nimmt die Verringerung der Ansagelautstärke als Reaktion auf seine Spracheingabe wahr. Die Reaktion des Ansagesystems gibt die Sicherheit, daß eine Spracheingabe vom Ansagesystem registriert worden ist. Auf diese Weise können Mißverständnisse oder überflüssigerweise wiederholte Spracheingabe vermieden werden. Die Effizienz, mit der die Kommunikationen zwischen dem Ansagesystem und dem Benutzer vollzogen wird, kann so gesteigert werden.

Das Ansagesignal kann auch stufenweise gedämpft werden. So ist es beispielsweise von Vorteil, das Ansagesignal während einer vorbestimmten Überwachungsdauer mit einem mittleren Dämpfungsfaktor zu dämpfen, so daß der Benutzer in dieser Zeit einerseits die Verringerung der Lautstärke der Ansage als Reaktion des Ansagesystems wahrnimmt, andererseits die Ansage weiterhin ohne Probleme verstehen kann. Auf diese Weise kann verhindert werden, daß das Ansagesystem beispielsweise auf nicht relevante Spracheingaben des Benutzers mit einer vollständigen Dämpfung des Ansagesignals reagiert. Solche Spracheingaben können z.B. Hust- oder Räuspergeräusche oder laute Umgebungsgeräusche sein. Erst bei einer fortgesetzten Überlagerung von Ansage und Spracheingabe wird das Ansagesignal vollständig gedämpft und die Ansage so durch die Spracheingabe zum "Verstummen" gebracht. Der Benutzer kann nun in Ruhe seine Spracheingabe vornehmen, ohne durch die Ansage gestört zu werden und der Gefahr ausgesetzt zu sein, sich beispielsweise zu versprechen.

Das Ansagesystem kann eine Dämpfungsvorrichtung enthalten, die durch das Ansagesignal angesteuert wird und einem Multiplikationsglied mindestens einen Dämpfungsfaktor zuführt, mit dem das Ansagesignal multipliziert wird. Das eben erläuterte stufenweise Dämpfen des Ansagesignals kann so durch Multiplikation desselben mit unterschiedlichen Dämpfungsfaktoren durchgeführt werden.

Gemäß einem weiteren Aspekt der Erfindung ist ein Ansagesystem zum Durchführen des beschriebenen Verfahrens vorgesehen.

Weitere vorteilhafte Weiterbildungen der Erfindung sind Gegenstand der Unteransprüche sowie der folgenden Beschreibung.

Die Erfindung wird im folgenden an Hand der Figuren näher erläutert. Darin zeigen:

Figur 1 ein Blockdiagramm eines sprachgesteuerten Ansagesystems,

Figur 2 ein Blockdiagramm einer Detektoreinrichtung zum Erkennen gleichzeitig auftretender Ansage und Spracheingabe,

Figur 3 eine Schaltungsanordnung eines digitalen Pulsfilters der Detektoreinrichtung nach Figur 2,

Figur 4 eine erste Adaptionsfunktion, die in dem Pulsfilter nach Figur 3 berücksichtigt wird,

Figur 5 eine Schaltungsanordnung eines digitalen Grundfilters der Detektoreinrichtung nach Figur 2,

Figur 6 eine zweite Adaptionsfunktion, die in dem Grundfilter nach Figur 5 berücksichtigt wird,

Figur 7 den zeitlichen Verlauf eines Ansagesignals,

Figur 8 den zeitlichen Verlauf eines Spracheingabesignals,

Figur 9 eine Impulsantwort eines Echopfades für das Beispiel nach Figur 7 und 8,

Figur 10 den zeitlichen Verlauf der Signaldifferenz von mittlerem Ansageenergiegehalt und mittlerem Spracheingabeenergiegehalt für das Beispiel nach Figur 7 und 8,

Figur 11 den zeitlichen Verlauf von Pulsmaß und Grundmaß für das Beispiel nach Figur 7 und 8,

Figur 12 den zeitlichen Verlauf eines Detektorsignals für das Beispiel nach Figur 7 und 8,

Figur 13 ein Blockdiagramm einer alternativen Ausführungsform des Ansagesystems,

Figur 14 ein Ablaufdiagramm zum Steuern des Ansagesystems nach Figur 13,

Figur 15 ein Blockdiagramm des sprachgesteuerten Ansagesystems mit einer Echounterdrückungseinrichtung in einer weiteren Ausführungsform,

Figur 16 ein Blockdiagramm einer Interpolationseinrichtung und einer Dezimatoreinrichtung der Echounterdrückungseinrichtung,

Figur 17 ein Blockdiagramm der Interpolationseinrichtung und der Dezimatoreinrichtung in einer speziellen Ausführungsform,

Figur 18 ein Blockdiagramm eines Echounterdrückungsfilters der Echounterdrückungseinrichtung,

Figur 19 eine Schaltungsanordnung der Interpolationseinrichtung und der Dezimatoreinrichtung der Echounterdrückungseinrichtung in einem Ausführungsbeispiel,

Figur 20 den Frequenzverlauf der Dämpfung eines mit der Echounterdrückungseinrichtung nach Figur 19 verarbeiteten Ansagesignals,

Figur 21 den zeitlichen Verlauf der mittleren Dämpfung des Echopfades und der Abweichung eines aktuellen Satzes von Filterkoeffizienten von einem optimalen Satz für eine bekannte Echounterdrückungseinrichtung,

Figur 22 den zeitlichen Verlauf der mittleren Dämpfung des Echopfades und der Abweichung des aktuellen Satzes von Filterkoeffizienten von dem optimalen Satz für ein Ausführungsbeispiel der Echounterdrückungseinrichtung nach Figur 19 und

Figur 23 den zeitlichen Verlauf der mittleren Dämpfung des Echopfades und der Abweichung des aktuellen Satzes von Filterkoeffizienten von dem optimalen Satz für ein weiteres Ausführungsbeispiel der Echounterdrückungseinrichtung nach Figur 19.

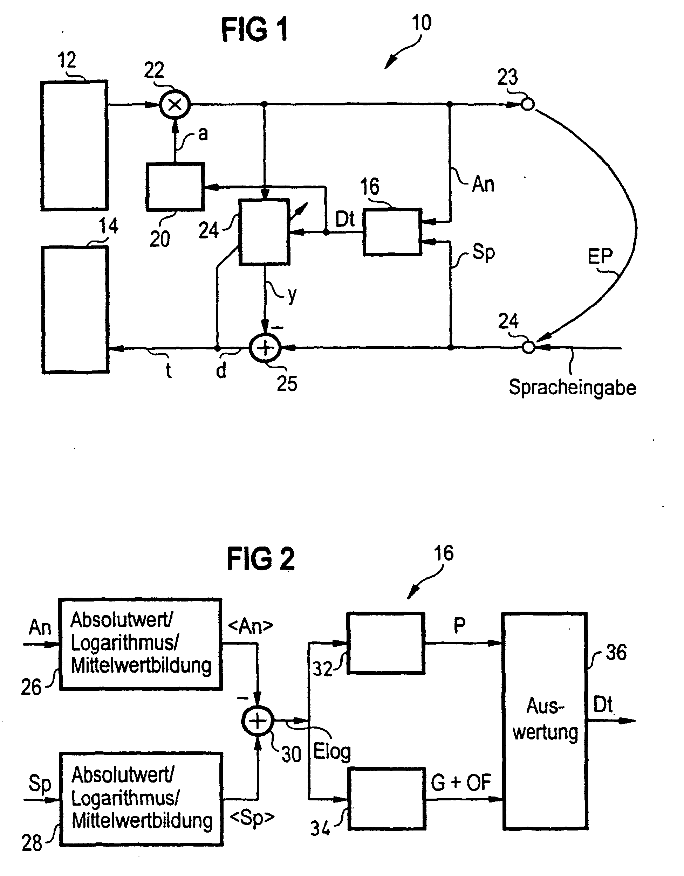

In Figur 1 ist ein sprachgesteuertes Ansagesystem 10 dargestellt, das es dem Benutzer ermöglicht, eine Spracheingabe während einer Ansage vorzunehmen. An Hand der Figur 1 wird im folgenden das Zusammenwirken der funktionswesentlichen Komponenten des Ansagesystems 10 im Überblick dargestellt. Die Funktionsweise der einzelnen Komponenten wird später an Hand der übrigen Figuren detailliert erläutert. Das Ansagesystem 10 enthält neben einer Ansageeinrichtung 12 und einer Spracherkennungseinrichtung 14 als funktionswesentliche Komponenten eine Detektoreinrichtung 16, eine Echounterdrückungseinrichtung 18 und eine Dämpfungsvorrichtung 20. Das Ansagesystem 10 enthält weiterhin ein Multiplikationsglied 22, dessen Eingänge mit der Ansageeinrichtung 12 und der Dämpfungsvorrichtung 20 verbunden sind und dessen Ausgang an die Echounterdrückungseinrichtung 18 und die Detektoreinrichtung 16 angeschlossen ist. Ferner führt der Ausgang des Multiplikationsgliedes 22 auf einen Ausgang 23 des Ansagesystems 10, über den die Ansage dem Benutzer zugeführt wird.

Der Ansage liegt ein digitales Ansagesignal An zugrunde, das in bekannter Weise durch einen D-A-Wandler (nicht dargestellt) in ein analoges und dann für den Benutzer hörbares Signal gewandelt wird. Ebenso wird aus einer Spracheingabe des Benutzers durch A-D-Wandlung eines der Spracheingabe entsprechenden analogen Signals ein digitales Spracheingabesignal Sp erzeugt, das dem Ansagesystem 10 über einen Eingang 24 zugeführt wird. Das Ansagesignal An und das Spracheingabesignal Sp werden der Detektoreinheit 16 zugeführt, die in noch zu beschreibender Weise ein gleichzeitiges Auftreten von Ansage und Spracheingabe feststellt. Bei gleichzeitiger Ansage und Spracheingabe gibt die Detektoreinrichtung 16 ein Detektorsignal Dt mit dem Logikwert 1 aus, während für den Fall, daß sich Ansage und Spracheingabe zeitlich nicht überlagern, das Detektorsignal Dt den Logikwert 0 annimmt.

Über das Detektorsignal Dt werden die Echounterdrückungseinrichtung 18 und die Dämpfungsvorrichtung 20 angesteuert.

Durch die Dämpfungsvorrichtung 20 kann die Lautstärke der Ansage variiert werden. Wird innerhalb der Detektoreinrichtung 16 ein gleichzeitiges Auftreten von Spracheingabe und Ansage erfaßt, so wird die Dämpfungsvorrichtung 20 mit dem Logikwert 1 des Detektorsignals Dt angesteuert. In diesem Fall wird in der Dämpfungsvorrichtung 20 ein erster Dämpfungsfaktor a eingestellt, der eine Verringerung der Lautstärke der Ansage bewirkt, indem er dem Multiplikationsglied 22 zugeführt wird und dieses das aus der Ansageeinrichtung 12 stammende Ansagesignal An entsprechend dämpft. Liegt nach einer vorbestimmten Überwachungsdauer noch immer eine zeitliche Überlagerung von Ansage und Spracheingabe vor, so wird das Ansagesignal mittels eines zweiten Dämpfungsfaktors a so stark gedämpft, daß eine Ansagepause eintritt, wie später genauer erläutert wird.

Die Echounterdrückungseinrichtung 18 hat die Aufgabe, die Spracheingabe von einem Ansageecho zu befreien. Dieses wird dadurch erzeugt, daß die Ansage über einen in Figur 1 mit EP bezeichneten Echopfad vom Ausgang 23 zum Eingang 24 des Ansagesystems 10 übertragen wird und dort in das zu verarbeitenden Spracheingabesignal Sp eingeht. Um das Ansageecho aus dem Spracheingabesignal Sp zu entfernen, werden die Übertragungseigenschaften des Echopfades EP, d. h. seine Übertragungsfunktion, von der Echounterdrückungseinrichtung 18 in einem schnell konvergierenden Adaptionsverfahren nachgebildet. Die Echounterdrückungseinrichtung 18 wird durch das Detektorsignal Dt angesteuert und erzeugt aus dem Ansagesignal An, das ihm durch das Multiplikationsglied 22 zugeführt wird, ein dem Ansageecho nachgebildetes Kompensationssignal y, das an dem Additionsglied 25 von dem Sprachsignal Sp abgezogen wird. Der Spracherkennungseinrichtung 14 steht so ein digitales Differenzsignal d der von dem Ansageecho befreiten Spracheingabe und nach einem weiteren Verarbeitungsschritt, der später erläutert wird, ein Nutzsignal t zur Verfügung. In der Spracherkennungseinrichtung 14 kann in bekannter Weise der relevante Nachrichteninhalt aus der Spracheingabe gewonnen werden.

In Figur 2 ist ein Blockdiagramm der Detektoreinrichtung 16 dargestellt. Die Detektoreinrichtung 16 enthält parallel geschaltet ein Ansagemittelungsglied 26 und ein Eingabemittelungsglied 28. Diese Komponenten sind mit einem Additionsglied 30 verknüpft, dem parallel angeordnet ein digitales Pulsfilter 32 und ein digitales Grundfilter 34 nachfolgen. Das Pulsfilter 32 und das Grundfilter 34 sind mit einer Auswerteeinheit 36 verbunden.

Anhand der Figuren 2 bis 12 soll im folgenden die Erfindung an einem Beispiel erläutert werden, bei dem das Ansagesignal An und das Spracheingabesignal Sp jeweils eine Folge von Abtastwerten sind, die durch Abtasten der entsprechenden analogen Signale mit einer Abtastrate von 8 kHz erzeugt sind. Das Ansagemittelungsglied 26 ermittelt aus dem Ansagesignal An einen mittleren Energieinhalt <An>, indem für eine geeignete Anzahl von Abtastwerten des Ansagesignals An eine Absolutwertbildung, Logarithmierung und Mittelwertbildung durchgeführt wird. Die Anzahl der Abtastwerte ist für dieses Beispiel mit 80 angesetzt, so daß das Ansagesignal An über eine Mittelungsdauer von 10 ms gemittelt wird. Die Mittelwertbildung kann z.B. in bekannter Weise durch Tiefpaßfilterung erfolgen. Ein so erfaßter mittlerer Energiegehalt <An> des Ansagesignals An wird dem Additionsglied 30 zugeführt.

In analoger Weise wird in dem Eingabemittelungsglied 28 durch Absolutwertbildung, Logarithmierung und Mittelwertbildung über die vorgegebene Mittelungsdauer ein mittlerer Energiegehalt <Sp> des Spracheingabesignals Sp erzeugt. Auch dieses Signal <Sp> wird dem Additionsglied 30 zugeführt. Dieses berechnet für Zeitfenster vorbestimmter Länge, z.B. 125 ns, die Differenzen aus dem mittleren Energiegehalt <Sp> des Spracheingabesignals Sp und dem mittleren Energiegehalt < An> des Ansagesignals An. Diese Differenz ist in Figur 2 mit Elog bezeichnet. Das Additionsglied 30 gibt die Differenz Elog des aktuell zu verarbeitenden Zeitfensters an das digitale Pulsfilter 32 und das digitale Grundfilter 34 ab. Das Pulsfilter 32 bzw. das Grundfilter 34 erzeugen in noch zu beschreibender Weise aus der Differenz Elog ein Pulsmaß P bzw. ein Grundmaß G, die der Auswerteeinheit 36 zugeführt werden. In der Auswerteeinheit 36 wird das Pulsmaß P mit dem Grundmaß G plus einem vorgegebenen Schwellenwert OF verglichen. Ist das Pulsmaß P größer als das um den Schwellenwert OF vergrößerte Grundmaß G, so gibt die Auswerteeinheit 36 das Auswertesignal Dt mit dem Logikwert 1 ab, das das gleichzeitige Auftreten von Ansage- und Spracheingabe anzeigt.

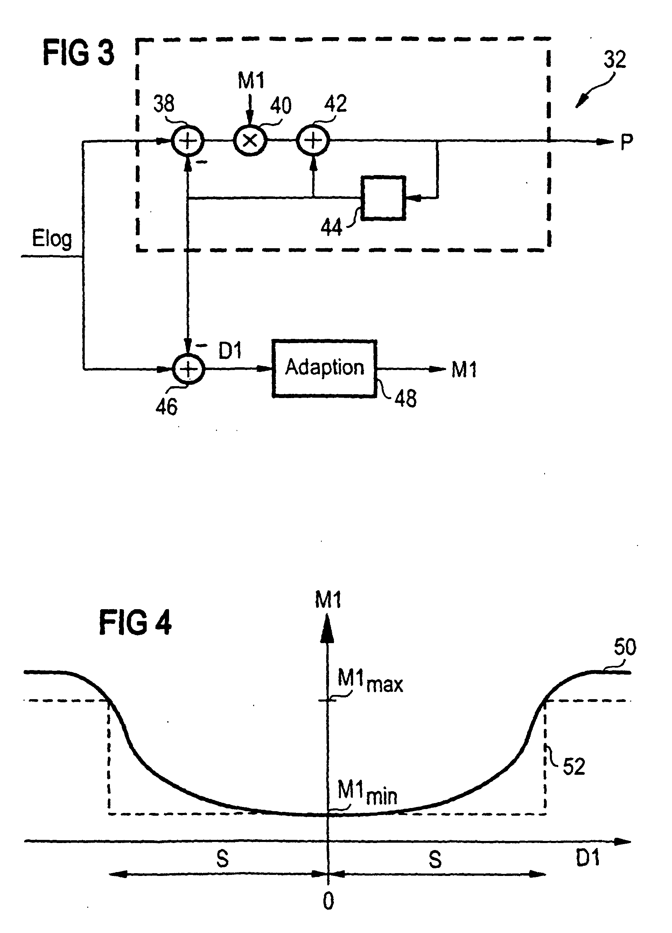

In Figur 3 ist das digitale Pulsfilter 32 dargestellt, das aus der Differenz Elog des aktuellen Zeitfensters das Pulsmaß P erzeugt. Das Pulsfilter 32 enthält zwei Verarbeitungszweige. Im ersten Verarbeitungszweig sind in Reihe geschaltet ein erstes Additionsglied 38, ein Multiplikationsglied 40 und ein zweites Additionsglied 42 enthalten. Dem zweiten Additionsglied 42 schließt sich ein Verzögerungsglied 44 an, dessen Ausgang mit dem Eingang des ersten Additionsgliedes 38 verbunden ist. Das Verzögerungsglied 44 erzeugt eine Signalverzögerung Ts, die der Länge eines Zeitfensters entspricht. In dem vorliegenden Beispiel arbeiten die digitalen Filter mit einer Taktfrequenz von 8 kHz, so daß die Signalverzögerung Ts und damit die Länge eines Zeitfensters mit 125 ns angesetzt ist. In dem zweiten Verarbeitungszweig sind ein Additionsglied 46 und ein Adaptionsglied 48 in Reihe geschaltet. Der Eingang des Additionsgliedes 46 ist zudem mit dem Ausgang des Verzögerungsgliedes 44 verbunden.

Zur Erläuterung der Funktionsweise des Pulsfilters 32 ist Figur 4 heranzuziehen, in der eine wannenförmige, zur NullAchse symmetrische Kennlinie 50 (durchgezogene Linie) dargestellt ist, die eine erste Adaptionsfunktion charakterisiert. Die Adaptionsfunktion nach Figur 4 gibt den Zusammenhang zwischen einer ersten Hilfsgröße D1 und einer ersten Adaptionsgröße M1 an, die in dem ersten Verarbeitungszweig des Pulsfilters 32 zur Ermittlung des Pulsmaßes P verwendet wird. Wie der Figur 3 zu entnehmen ist, wird die erste Hilfsgröße D1 gebildet, indem an dem Additionsglied 28 das um Ts verzögerte Pulsmaß P, d.h. das Pulsmaß P des dem aktuellen Zeitfenster vorhergehenden Zeitfensters, von der Differenz Elog des aktuellen Zeitfensters subtrahiert wird. Bezeichnet man das aktuell zu verarbeitenden Zeitfenster mit n und das vorhergehende, d. h. eine Signalverzögerung Ts zuvor verarbeitete Zeitfenster, mit n-1, so kann D1 geschrieben werden als

$$(1) \qquad D1(n) = Elog(n) - P(n-1).$$

Die Hilfsgröße D1 gibt ein Maß an für die Änderung der Pulsmaße P zweier aufeinanderfolgender Zeitfenster. Aus der Hilfsgröße D1 nach der Beziehung (1) erzeugt das Adaptionsglied 48 entsprechend der Kennlinie 50 nach Figur 4 die Adaptionsgröße M1, die dem Multiplikationsglied 40 zugeführt wird. Im ersten Verarbeitungszweig wird am Additionsglied 38 das Pulsmaß P(n-1) des zuletzt verarbeiteten Zeitfensters n-1 von der Differenz Elog(n) des aktuellen Zeitfensters n subtrahiert. Das Ergebnis dieser Subtraktion wird am Multiplikationsglied 40 mit der Adaptionsgröße M1 multipliziert. An dem Additionsglied 42 werden schließlich das Ergebnis der am Multiplikationsglied 40 durchgeführten Multiplikation und das Pulsmaß P(n-1) des zuletzt verarbeiteten Zeitfensters n-1 addiert und das Pulsmaß P(n) des aktuellen Zeitfensters n ausgegeben. Dieses Pulsmaß P(n) ist durch Gleichung (2) gegeben:

$$(2) \qquad P(n) = (1-M1) \cdot P(n-1) + M1 \cdot Elog(n).$$

Das Pulsmaß P(n) des aktuell zu verarbeitenden Zeitfensters n ist die Summe zweier komplementär zueinander gewichteter Anteile. Die Gewichtung der beiden Anteile erfolgt über die Adaptionsgröße M1, die im allgemeinen Werte zwischen 0 und 1 annehmen kann. Für kleine Werte von M1 dominiert der erste Anteil $(1-M1) \cdot P(n-1)$ in Gleichung (2), so daß das Pulsmaß P(n) des aktuellen Zeitfensters n vor allem durch das Pulsmaß P(n-1) des vorhergehenden Zeitfensters n-1 gegeben ist. Dagegen dominiert für große Werte von M1 der zweite Anteil $M1 \cdot Elog(n)$, so daß das Pulsmaß P(n) des aktuellen Zeitfensters n im wesentlichen durch die Differenz Elog(n) des aktuellen Zeitfensters n gegeben ist. Die Adaptionsgröße M1 regelt somit die Gewichtung, mit der sich das Pulsmaß P(n) des aktuellen Zeitfensters n aus dem vorhergehenden Pulsmaß P(n-1) und der aktuellen Differenz Elog(n) zusammensetzt.

Wie sich aus Gleichung (2) in Verbindung mit Figur 4 ergibt, bleibt für betragsmäßig kleine Werte von D1 das Pulsmaß P(n) des aktuellen Zeitfensters n gegenüber dem Pulsmaß P(n-1) des vorhergehenden Rahmens n-1 nahezu unverändert, da die erste Adaptionsfunktion in diesem Wertebereich von D1 kleine Werte nahe 0 annimmt. Dies führt bei geringen Schwankungen der Differenz Elog zu einer Glättung des zeitlichen Verlaufs des Pulsmaßes P, da sich die Werte von P nach Gleichung (2) bei betragsmäßig kleinen Werten von D1 nur wenig verändern. Für betragsmäßig große Werte von D1 nimmt der Wert der Adaptionsgröße M1 zu, so daß der Beitrag der Differenz Elog(n) des aktuellen Zeitfensters n größer wird und das Pulsmaß P(n) des aktuellen Zeitfensters n der Differenz Elog folgt. Die Wirkung des digitalen Pulsfilters 32 nach Figur 3 liegt demnach darin, daß starke Pulse im zeitlichen Verlauf der Differenz Elog erfaßt werden, während geringe Schwankungen von Elog geglättet werden.

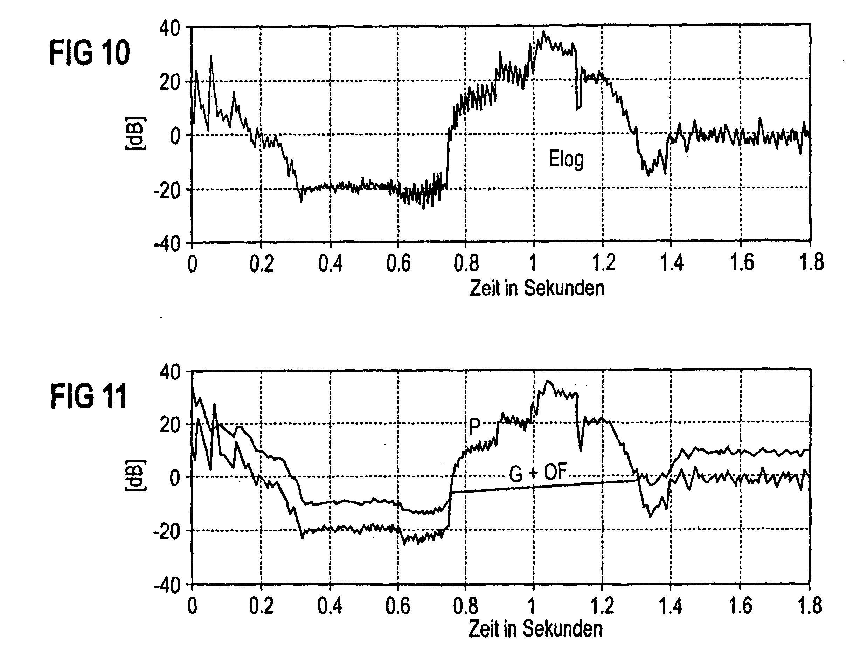

Die erste Adaptionsfunktion mit der Kennlinie 50 nach Figur 4 kann durch eine Rechteckfunktion angenähert werden, die für Betragswerte von D1 kleiner als ein vorgegebener Amplitudenwert s einen Minimalwert $M1_{min}$ und für Betragswerte von D1 größer gleich dem vorgegebenen Amplitudenwert s einen Maximalwert $M1_{max}$ annimmt. Für das später erläuterte Beispiel ist der vorgegebene Amplitudenwert s gleich 10, der Minimalwert $M1_{min}$ gleich 1/32 und der Maximalwert $M1_{max}$ gleich 1/2. Die Rechteckfunktion ist in Figur 4 durch eine rechteckige Kennlinie 52 (gestrichelte Linie) dargestellt. Der Anschaulichkeit wegen ist in Figur 4 der Minimalwert $M1_{min}$ übertrieben groß dargestellt. Der Amplitudenwert s ist so eingestellt, daß das Pulsmaß P von geringfügigen Schwankungen der Differenz Elog im wesentlichen unbeeinflußt bleibt, sich jedoch starke Pulse von Elog im zeitlichen Verlauf von P wiederspiegeln, was später an Hand der Figuren 10 und 11 illustriert wird.

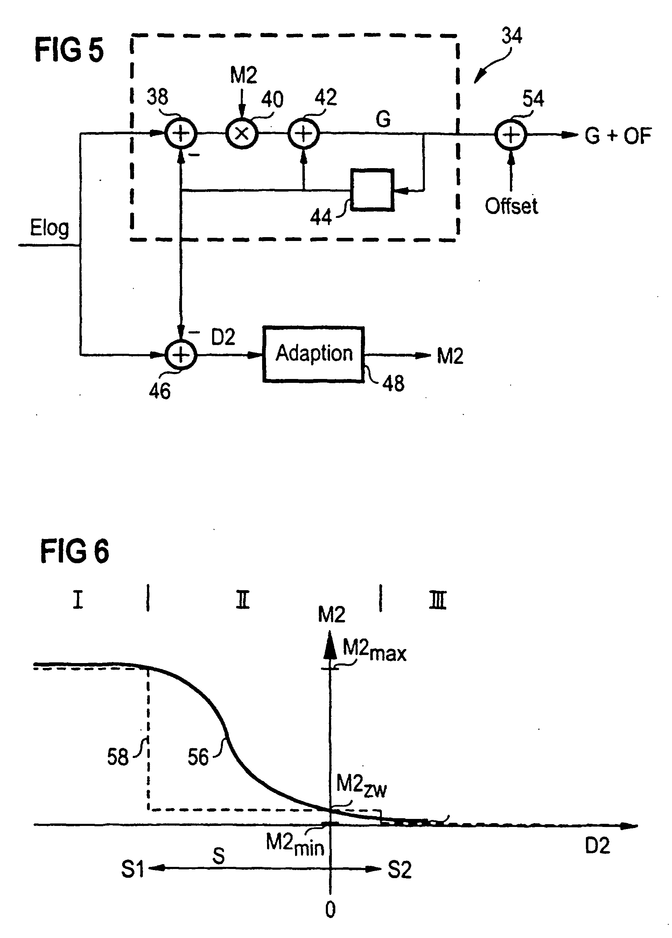

In Figur 5 ist das digitale Grundfilter 34 dargestellt, das aus der Differenz Elog(n) des aktuellen Zeitfensters n das Grundmaß G erzeugt. Das Grundfilter 34 ist im wesentlichen ebenso aufgebaut, wie das Pulsfilter 14, so daß auf eine detaillierte Beschreibung seines Aufbaus an dieser Stelle verzichtet werden kann. Die Komponenten des Grundfilters 34, die mit den Komponenten des Pulsfilters 32 nach Figur 2 übereinstimmen, sind in Figur 5 mit den Bezugszeichen der Komponenten des Pulsfilters 32 versehen. Das digitale Grundfilter 34 enthält zusätzlich ein weiteres Additionsglied 54, das am Ausgang des ersten Verarbeitungszweiges angeordnet ist. An dem Additionsglied 54 werden das von dem Additionsglied 42 ausgegebene Grundmaß G und der vorgegebene Schwellenwert OF addiert und das Ergebnis dieser Addition ausgegeben. Die Addition des Schwellenwertes OF sorgt für einen Sicherheitsabstand des Grundmaßes G gegenüber dem Pulsmaß P. Der Schwellenwert OF wird so eingestellt, daß der Sicherheitsabstand etwa 6 dB bis 10 dB beträgt.

Das Grundfilter 34 unterscheidet sich von dem Pulsfilter 32 ferner darin, daß in dem Adaptionsglied 48 eine von der ersten Adaptionsgröße M1 verschiedene zweite Adaptionsgröße M2 ermittelt wird, die dem Multiplikationsglied 40 zugeführt wird. Der Ermittlung der zweiten Adaptionsgröße M2 liegt eine zweite Adaptionsfunktion zugrunde, deren Kennlinie 56 in Figur 6 durchgezogen dargestellt ist. Die zweite Adaptionsgröße M2 wird in Abhängigkeit einer zweiten Hilfsgröße D2 ermittelt, die dadurch erzeugt wird, daß an dem Additionsglied 46 des Grundfilters 34 das um Ts verzögerte Grundmaß G(n-1) von der Differenz Elog(n) des aktuellen Zeitfensters n subtrahiert wird. D2 kann geschrieben werden als

$$(3) \qquad D2(n) = Elog(n) - G(n-1).$$

Wie der Figur 6 zu entnehmen ist, fällt die Kennlinie 56 innerhalb eines Übergangsbereiches II, der überwiegend negative Werte von D2 enthält, von einem höheren Niveau auf ein niedrigeres Niveau nahe 0. Die entsprechend der Kennlinie 56 ermittelte zweite Adaptionsgröße M2 wird in dem ersten Verarbeitungszweig zur Berechnung des Grundmaßes G(n) des aktuellen Zeitfensters n verwendet. Am Additionsglied 38 wird das Grundmaß G(n-1) des zuletzt verarbeiteten Zeitfensters n-1 von der Differenz Elog(n) des aktuellen Zeitfensters n subtrahiert und das Ergebnis dieser Subtraktion am Multiplikationsglied 40 mit der zweiten Adaptionsgröße M2 multipliziert. An dem Additionsglied 42 wird das Ergebnis dieser Multiplikation und das Grundmaß G(n-1) des zuletzt verarbeiteten Zeitfensters n-1 addiert. Schließlich wird an dem Additionsglied 54 das von dem Additionsglied 42 gelieferte Grundmaß G(n) und der Schwellenwert OF addiert und als Ergebnis ausgegeben. Das Grundmaß G(n) ist durch Gleichung (4) gegeben:

$$(4) \qquad G(n) = (1-M2) \cdot G(n-1) + M2 \cdot Elog(n).$$

Zum Grundmaß G(n) tragen zwei Anteile bei, die durch die Adaptionsgröße M2 komplementär zueinander gewichtet sind. M2 kann im allgemeinen Werte zwischen 0 und 1 annehmen. Je größer M2 ist, desto weniger trägt der durch das Grundmaß G(n-1) des vorhergehenden Zeitfensters n-1 gegebene Anteil (1-M2)·G(n-1) zum Grundmaß G(n) des aktuellen Zeitfensters n bei. Umgekehrt wird mit abnehmendem M2 der Beitrag M2·Elog(n) verringert. So ist nach Gleichung (4) in Verbindung mit Figur 6 das Grundmaß G(n) für positive Werte von D2 (Bereich III) im wesentlichen durch das Grundmaß G(n-1) des vorhergehenden Zeitfensters n-1 gegeben, da M2 für positive Werte von D2 Werte nahe 0 annimmt. Das Grundmaß G bleibt also bei einem plötzlichen Anstieg der Differenz Elog, d.h. bei einem Einsetzen der Spracheingabe während der Ansage, im wesentlichen unverändert. Für negative Werte von D2, d.h. für größere Werte von M2, trägt die Differenz Elog(n) des aktuellen Zeitfensters n zum Pulsmaß G(n) bei. Dieser Wertebereich von D2 ist in Figur 6 mit I bezeichnet. I kennzeichnet nach Gleichung (3) einen Bereich, in dem die Differenz Elog(n) gegenüber dem Grundmaß G(n-1) deutlich abfällt. Dies ist der Fall, sobald die Spracheingabe während der Ansage beendet wird.

Die zweite Adaptionsfunktion kann durch eine Stufenfunktion angenähert sein. In Figur 6 ist als Annäherung an die durch die Kennlinie 56 charakterisierte zweite Adaptionsfunktion eine stufenförmige Kennlinie 58 gestrichelt dargestellt. Die Adaptionsgröße M2 nimmt entsprechend der Kennlinie 58 in dem Bereich I, der durch Werte von D2 kleiner einem vorgegebenen negativen Wert S1 gegeben ist, einen maximalen Wert $M2_{max}$, in dem Bereich II, der durch Werte von D2 größer gleich dem vorgegebenen negativen Wert S1 und kleiner gleich einem vorgegebenen positiven Wert S2 gegeben ist, einen Zwischenwert $M2_{zw}$ und in dem Bereich III, der durch Werte von D2 größer dem vorgegebenen positiven Wert S2 gegeben ist, einen minimalen Wert $M2_{min}$ an. Für das im folgenden erläuterte Beispiel wird die zweite Adaptionsgröße M2 entsprechend der Kennlinie 58 bestimmt. Die Kennlinie 58 ist durch S1 gleich -20, S2 gleich 10, $M2_{max}$ gleich 1/16, $M2_{zw}$ gleich 1/128 und $M2_{min}$ gleich 1/32768 charakterisiert.

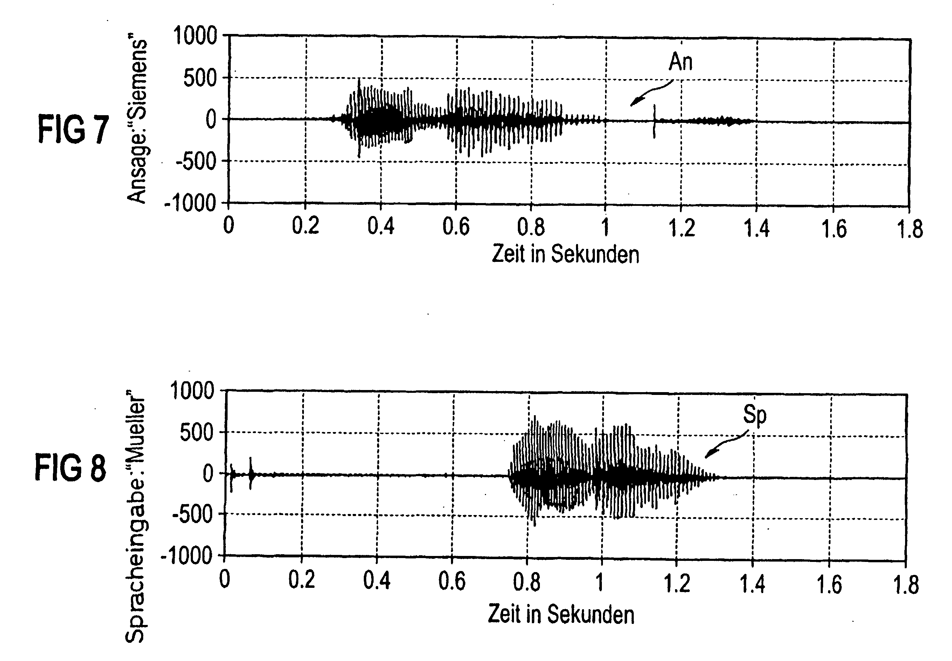

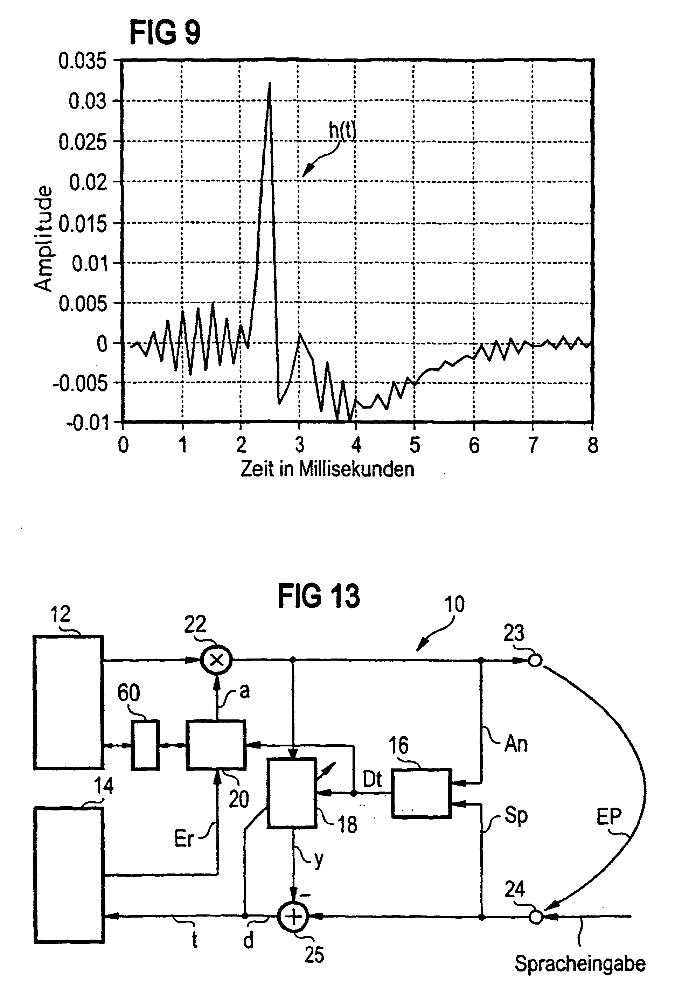

Die eben erläuterte Funktionsweise der Detektoreinrichtung 16 wird im folgenden an Hand der Figur 7 bis 12 am Beispiel einer konkreten Ansage und einer konkreten Spracheingabe illustriert. Die Spracheingabe ist dabei der Ansage zeitlich teilweise überlagert. In Figur 7 ist der zeitliche Verlauf des Ansagesignals An, das einer Ansage "Siemens" entspricht, in einem Zeitbereich von 0 bis 1,8 Sekunden dargestellt. In demselben Zeitbereich ist in Figur 8 das Sprachsignal Sp gezeigt, das durch A-D-Wandlung einer Spracheingabe "Mueller" gewonnen worden ist. Wie den Figur 7 und 8 zu entnehmen ist, liegt eine teilweise zeitliche Überlagerung des Ansagesignals An und des Spracheingabesignals Sp vor. Der Echopfad EP nach Figur 1 ist in diesem Beispiel durch eine über den gesamten Frequenzbereich weitgehend konstante Dämpfung von ca. 24 dB charakterisiert, so daß die Ansage mit dieser Dämpfung über den Echopfad EP vom Ausgang 23 auf den Eingang 24 des Ansagesystems 10 übertragen wird und dort als Ansageecho in das Spracheingabesignal Sp eingeht. Die weitgehend frequenzunabhängige Dämpfung und damit die entsprechende, über den Frequenzbereich konstante Übertragungsfunktion des Echopfades EP spiegelt sich in einer zeitlich eng begrenzten Impulsantwort h(t) wieder, die in Figur 9 dargestellt ist.

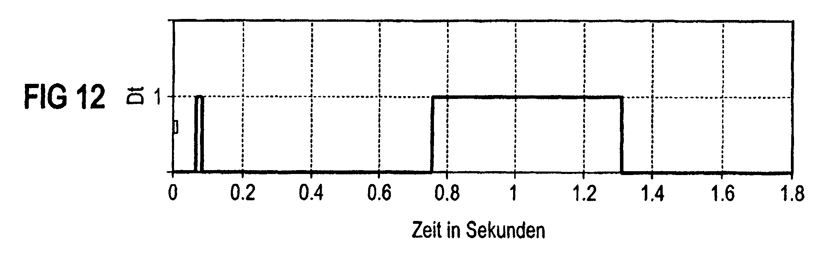

Aus dem Ansagesignal An und dem Spracheingabesignal Sp wird nach Absolutwertbildung, Logarithmierung und Mittelwertbildung die Signaldifferenz Elog gebildet, deren zeitlicher Verlauf in Figur 10 dargestellt ist. Wie ein Vergleich der Figur 10 mit den Figur 7 und 8 zeigt, nimmt die Signaldifferenz Elog zu den Zeiten große Werte an, zu denen sich das Ansagesignal An und das Spracheingabesignal Sp überlagern. Tritt das Ansagesignal An dagegen allein auf, so ist der zeitliche Verlauf der Signaldifferenz Elog weitgehend konstant. Die digitalen Filter 32 und 34 erzeugen aus der Signaldifferenz Elog in oben beschriebener Weise das Pulsmaß P und das Grundmaß G plus dem vorgegebenen Schwellenwert OF, deren zeitlicher Verlauf in Figur 11 gezeigt ist. Zu den Zeiten, zu denen die Ansage allein auftritt, liegt das um den Schwellenwert OF vergrößerte Grundmaß, also G+OF, deutlich oberhalb des Pulsmaßes P, da in diesem Beispiel der Schwellenwert OF auf etwa 10 dB eingestellt ist. Für eine Ansage ohne gleichzeitige Spracheingabe wird das Detektorsignal Dt mit dem Logikwert 0 ausgegeben, wie in Figur 12 dargestellt ist. Bei gleichzeitigem Auftreten von Ansage- und Spracheingabe übersteigt dagegen das Pulsmaß P die Summe aus Grundmaß G und Schwellenwert OF, und die Detektoreinrichtung 16 gibt das Detektorsignal Dt mit dem Logikwert 1 aus, wie ebenfalls in Figur 12 gezeigt ist. Ein Vergleich der Figur 7, 8 und 12 zeigt, daß die Detektoreinrichtung 16 ein gleichzeitiges Auftreten von Ansage- und Spracheingabe zuverlässig und mit vernachlässigbarer Verzögerung erfaßt.

Die Dämpfungsvorrichtung 20 ist in dem Ausführungsbeispiel nach Figur 1 zum Variieren der Ansagelautstärke vorgesehen. Zu diesem Zweck wird das Ansagesignal bei Beginn einer zeitlichen Überlagerung zunächst mit dem ersten Dämpfungsfaktor a gedämpft. Der erste Dämpfungsfaktor a kann beispielsweise eine Dämpfung von 12 dB verursachen. Überlagern sich Ansage und Spracheingabe nach Ablauf der vorbestimmten Überwachungsdauer noch immer, so wird der zweite Dämpfungsfaktor a eingestellt, der beispielsweise so groß gewählt sein kann, daß er eine nahezu unendlich große Dämpfung der Ansage und so eine Ansagepause bewirkt.

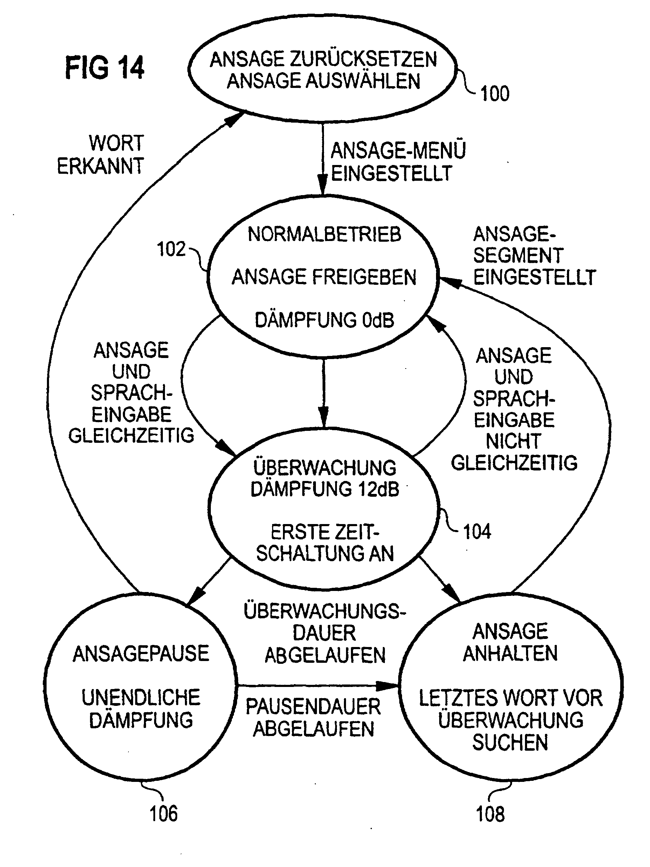

In einer alternativen Ausführungsform nach Figur 13 kann in dem Ansagesystem 10 nach Figur 13 zusätzlich eine mit der Dämpfungsvorrichtung 20 verbundene Kontrolleinheit 60 vorgesehen sein, die die Ansageeinrichtung 12 zum Wiederholen eines Ansagesegments, beispielsweise eines Wortes oder eines Satzes, veranlassen kann. In Figur 14 ist erläutert, wie die Ansage in dem Ansagesystem 10 gesteuert wird. Im Verfahrensschritt 100 wird mittels einer Spracheingabe des Benutzers eine Ansage aus dem Ansage-Menü ausgewählt. Die Ansage wird im Schritt 102 freigegeben und das entsprechende Ansagesignal An ungedämpft an den Ausgang 23 des Ansagesystems 10 nach Figur 13 übertragen. Gleichzeitig wird von der Detektoreinrichtung 16 fortlaufend geprüft, ob der Benutzer dem Ansagesystem 10 nach Figur 13 über den Eingang 24 eine Spracheingabe zuführt, d.h. ob Ansage und Spracheingabe gleichzeitig erfolgen. Solange dies nicht der Fall ist, hat das Detektorsignal Dt den logischen Wert 0, und das Ansagesignal An bleibt ungedämpft. Dies ist im Schritt 102 mit Normalbetrieb bezeichnet.

Erfolgt eine Spracheingabe des Benutzers während der Ansage, so steuert die Detektoreinrichtung 16 die Dämpfungsvorrichtung 20 mit dem logischen Wert 1 des Detektorsignals Dt an. Der Übergang des Detektorsignals Dt von 0 auf 1 entspricht in Figur 14 dem Übergang von Schritt 102 auf Schritt 104. Im Schritt 104 wird das gleichzeitige Auftreten von Ansage und Spracheingabe überwacht. Zu diesem Zweck stellt die schaltbare Dämpfungsvorrichtung 20 den ersten Dämpfungsfaktor a von z.B. 12 dB ein. Zugleich wird in der Kontrolleinheit 60 eine erste, in den Figuren nicht dargestellte Zeitschaltung aktiviert, die auf die vorgegebene Überwachungsdauer eingestellt ist. Wird innerhalb der Überwachungsdauer die Spracheingabe beendet, so geht das Detektorsignal Dt von 1 auf 0 über, und die Dämpfungsvorrichtung 20 wird veranlaßt, die Dämpfung aufzuheben. In Figur 14 entspricht dies dem Rücksprung von Schritt 104 auf Schritt 102.

Erfolgt jedoch während der Überwachungsdauer keine Spracheingabe, d.h. bleibt das Detektorsignal Dt auf dem logischen Wert 1, so wird nach Ablauf der Überwachungsdauer der Dämpfungsfaktor a im Schritt 106 näherungsweise auf unendlich geschaltet, wodurch eine Pause in der Ansage erzeugt wird. In dem Ausführungsbeispiel nach Figur 14 wird zugleich eine zweite Zeitschaltung in der Kontrolleinheit 60 aktiviert, die auf eine vorgegebene Pausendauer eingestellt ist. Wird innerhalb dieser Pausendauer ein Wort der Spracheingabe von der Spracherkennungseinrichtung 14 erkannt, so gibt diese ein Erkennungssignal Er an die Dämpfungsvorrichtung 20 ab. Durch das Erkennungssignal Er wird das Ansagesystem 10 nach Figur 13 in einen definierten Ausgangszustand zurückversetzt, in dem der Benutzer eine nächste Ansage aus dem Ansage-Menü auswählen kann. In Figur 14 entspricht dies dem Rücksprung nach Schritt 100.

Liefert die Spracherkennungseinrichtung der Dämpfungseinrichtung 20 das Erkennungssignal Er innerhalb der Pausendauer nicht, d.h. wird in dieser Zeit die Spracheingabe nicht erkannt, so hält die Kontrolleinheit 60 die Ansageeinrichtung 12 nach Ablauf der Pausendauer im Schritt 108 an. Ferner wird die Ansageeinrichtung 12 von der Kontrolleinheit 60 veranlaßt, ein Ansagesegment, d.h. das Wort oder den Satz, einzustellen, das bzw. der vor Beginn der Spracheingabe, d.h. vor der zeitlichen Überlagerung von Ansage und Spracheingabe, angesagt worden ist. Das Ansagesegment ist in dem beschriebenen Ausführungsbeispiel das Wort, das als letztes vor der Überwachung, d.h. vor dem Umschalten der Dämpfung von 0 dB auf 12 dB, von der Ansageeinrichtung 12 angesagt worden ist. Es wird dann mit Schritt 102 fortgesetzt, in dem die Dämpfung aufgehoben und die Ansage freigegeben wird.

In dem eben besprochenen Ausführungsbeispiel nach Figur 13 und 14 gibt die Spracherkennungseinrichtung 14 das Erkennungssignal Er aus, wenn sie ein Wort der Spracheingabe erkannt hat. In diesem Fall ist, wie oben dargestellt, beispielsweise eine zweite Zeitschaltung vorzusehen, welche auf die Pausendauer eingestellt ist. Auf die zweite Zeitschaltung kann jedoch verzichtet werden, wenn in einer weiteren alternativen Ausführungsform die Spracherkennungseinrichtung 14 ein Fehlersignal ausgibt, falls sie die Spracheingabe nicht erkannt hat. Das Fehlersignal wird der Detektoreinrichtung 20 und der Kontrolleinheit 60 zugeführt, welche die Ansageeinrichtung 12 in Schritt 108 anhält und in oben beschriebener Weise das Ansagesegment einstellt, das vor der Überwachung angesagt worden ist.

Das stufenweise Variieren der Lautstärke der Ansage durch das Einstellen diskreter Werte des Dämpfungsfaktors a durch die Dämpfungsvorrichtung 20 kann sich u.U. in Störgeräuschen, z.B. Knackgeräuschen, äußern. Solche Störgeräusche können vermieden werden, wenn die vorgegebenen Dämpfungsfaktoren a in der Dämpfungsvorrichtung 20 mittels digitaler Tiefpässe gefiltert werden. Die stufige Wertvorgabe der Dämpfungsfaktoren a kann so durch eine kontinuierliche Sollwert-Funktion mit geeigneten Übergangszeiten für die jeweiligen Übergänge ersetzt werden.

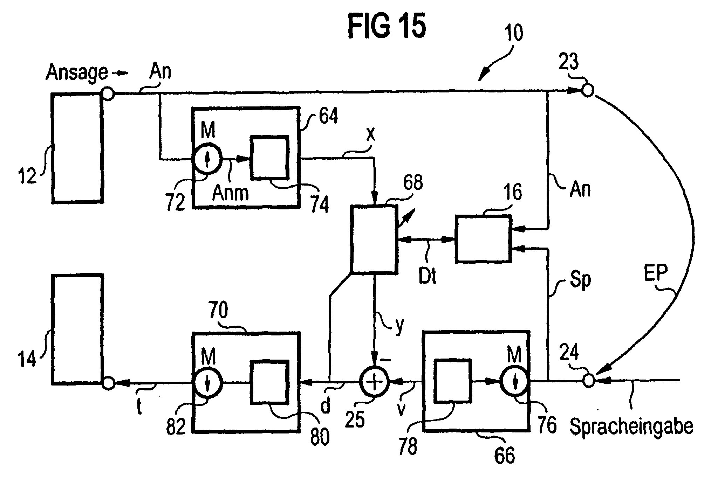

An Hand der Figuren 15 bis 23 wird im folgenden die Funktionsweise der Echounterdrückungseinrichtung 18 erläuert, die in den Figuren 1 und 13 gezeigt ist. Die Echounterdrückungseinrichtung 18 bildet mittels Abtastratenerhöhung und Dekorrelation des Ansagesignals An und des Spracheingabesignals Sp das Ansageecho in einem adaptiven Verfahren nach und entfernt dieses aus dem Spracheingabesignal Sp. In Figur 15 ist das Ansagesystem 10 in einer Ausführungsform dargestellt, in der die Dämpfungsvorrichtung 20, das Multiplikationsglied 22 und die Kontrolleinheit 60 nicht vorgesehen sind. Die Komponenten 20, 22 und 60 sind für die Funktionsweise der Echounterdrückungseinrichtung 18 nicht wesentlich. Das im folgenden Erläuterte gilt jedoch in gleicher Weie für die Ausführungsformen nach Figur 1 und Figur 13.

In den Figuren 1 und 13 ist die Echounterdrückungseinrichtung 18 der Übersichtlichkeit wegen in dem mit der Bezugsziffer 18 bezeichneten Symbol zusammengefaßt, ohne die Anordnung ihrer Komponenten in dem Ansagesystem 10 zum Ausdruck zu bringen. In Figur 15 sind nun ihre Komponenten im einzelnen dargestellt. In der Echounterdrückungseinrichtung 18 sind eine erste Interpolationseinrichtung 64, eine zweite Interpolationseinrichtung 66, ein adaptives Digitalfilter 68, im folgenden im Hinblick auf seine Verwendung auch als Echounterdrückungsfilter bezeichnet, eine Dezimatoreinrichtung 70 und das Additionsglied 25 enthalten. Die erste Interpolationseinrichtung 64 enthält in Reihe geschaltet einen ersten Abtastratenerhöher 72 und ein erstes digitales Dekorrelationsfilter 74. Die zweite Interpolationseinrichtung 66 ist ebenso aufgebaut wie die erste Interpolationseinrichtung 64 und enthält somit in Reihe geschaltet einen zweiten Abtastratenerhöher 76 und ein zweites Dekorrelationsfilter 78. Der erste und der zweite Abtastratenerhöher 72, 76 und das erste und das zweite Dekorrelationsfilter 74, 78 können jeweils identische Komponenten sein. Die Dezimatoreinrichtung 70 besteht aus einem digitalen Ausgleichsfilter 80 und einem nachfolgenden Abtastratenerniedriger 82.

Das Ansagesignal An und das Spracheingabesignal Sp sind jeweils eine Folge von Abtastwerten, deren zeitlicher Abstand durch eine vorgegebene erste Abtastperiode festgelegt ist. Im Hinblick auf die später erläuterte Abtastratenerhöhung wird die erste vorgegebene Abtastperiode im folgenden als lange Abtastperiode und entsprechend die Abtastrate des Ansagesignals An und des Spracheingabesignals Sp als niedrige Abtastrate bezeichnet. Abtastwerte, deren Abtastzeitpunkte durch die niedrige Abtastrate gegeben sind, werden im weiteren auch "regulär" genannt.

Das Ansagesignal An und das Spracheingabesignal Sp werden der Detektoreinrichtung 16 zugeführt, die ein gleichzeitiges Auftreten von Ansage und Spracheingabe feststellt. Die Detektoreinrichtung 16 steuert das Echounterdrückungsfilter 68 an und deaktiviert die später erläuterte Koeffizientenadaption, wenn Ansage und Spracheingabe gleichzeitig auftreten. Auf diese Weise ist gewährleistet, daß die Adaption des Echounterdrückungsfilters 68 nur dann erfolgt, wenn die Ansage allein auftritt.

Wie eingangs erwähnt, sind das Ansagesignal An und das Spracheingabesignal Sp mit der vorgegebenen niedrigen Abtastrate abgetastet. Die erste Interpolationseinrichtung 64 und die zweite Interpolationseinrichtung 66 haben die Funktion, aus dem Ansagesignal An bzw. dem Spracheingabesignal Sp ein Signal zu erzeugen, dessen Abtastrate erhöht ist und dessen Abtastwerte zudem wenigstens bis zu einem gewissen Grad dekorreliert sind. Das Ansagesignal An, das durch die erste Interpolationseinrichtung 64 in seiner Abtastrate erhöht und zudem dekorreliert wird, wird im folgenden als interpoliertes Ansagesignal x, seine Abtastrate als hohe Abtastrate bezeichnet. Entsprechend wird das Spracheingabesignal Sp, das das zweite Interpolationsteilfilter 66 durchlaufen hat, als interpoliertes Spracheingabesignal v bezeichnet.

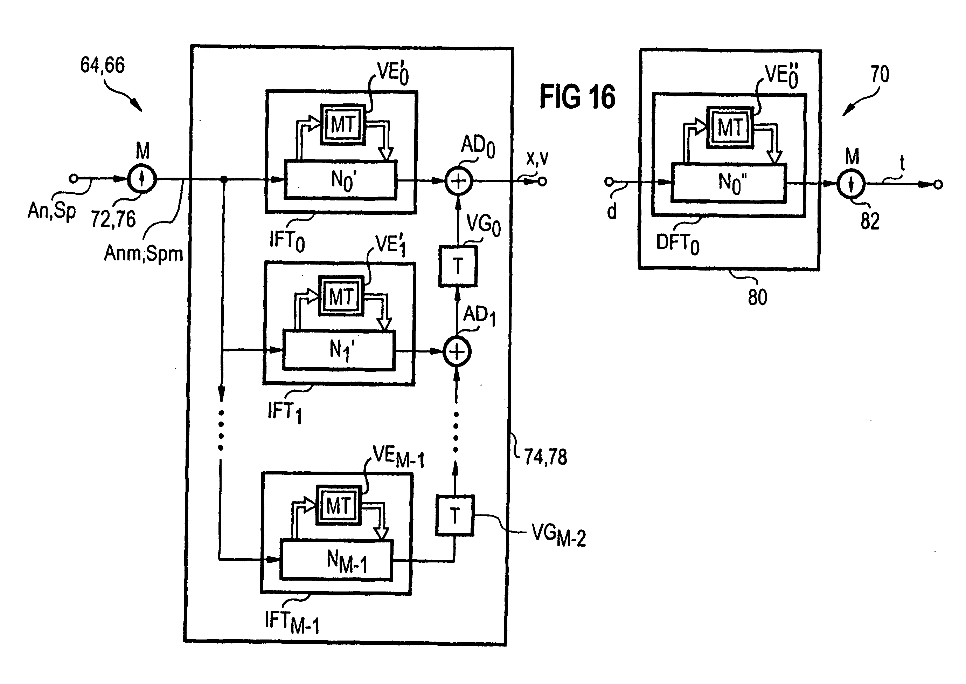

Der erste Abtastratenerhöher 72 erhöht die Abtastrate bzw. verringert die Abtastperiode des Ansagesignals An um einen vorgegebenen Faktor M, indem er zwischen aufeinanderfolgenden regulären Abtastwerten des Ansagesignals An M-1 Null-Werte einfügt. Ist die hohe Abtastrate mit F und damit die kurze Abtastperiode mit T angesetzt, so ist die niedrige Abtastrate durch den Wert des Quotienten aus F und M und die lange Abtastperiode durch den Wert des Produktes aus M und T gegeben. Ein auf eben erläuterte Weise mit Null-Werten versehenes, modifiziertes Ansagesignal, im folgenden Anm genannt, wird in dem ersten Dekorrelationsfilter 74 weiterverarbeitet. Die Übertragungsfunktion H' des ersten Dekorrelationsfilters 74 ist in Abhängigkeit der Ansage so angesetzt, daß die Abtastwerte des interpolierten Ansagesignals x zumindest teilweise dekorreliert sind. In gleicher Weise erzeugt die zweite Interpolationseinrichtung 66 aus dem Spracheingabesignal Sp zunächst ein modifiziertes Spracheingabesignal, im folgenden Spm genannt, bei dem zwischen aufeinanderfolgenden, regulären Abtastwerten M-1 Null-Werte eingefügt sind, und aus diesem das interpolierte Spracheingabesignal v, dessen Abtastrate um den Faktor M erhöht ist und dessen Abtastwerte ebenso dekorreliert sind, wie die Abtastwerte des interpolierten Ansagesignals x. Die Funktionsweise der Interpolationseinrichtungen 64 und 66 wird später unter Bezugnahme auf die Figuren 16 bis 23 erläutert.

Das Echounterdrückungsfilter 68 hat die Aufgabe, die Spracheingabe von dem Ansageecho zu befreien, das über den Echopfad EP vom Ausgang 23 zum Eingang 24 des Ansagesystems 10 übertragen wird und dort in das zu verarbeitende Spracheingabesignal Sp eingeht, wie in Figur 15 gezeigt ist. Um das Ansageecho aus dem Spracheingabesignal Sp zu entfernen, werden die Übertragungseigenschaften des Echopfades EP, d. h. seine Übertragungsfunktion, von dem Echounterdrückungsfilter 68 in einem schnell konvergierenden Adaptionsverfahren nachgebildet. Dem Echounterdrückungsfilter 68 wird das interpolierte Ansagesignal x zugeführt. Das Echounterdrückungsfilter 68 erzeugt in noch zu beschreibender Weise das Kompensationssignal y mit der vorgegebenen hohen Abtastrate. An dem Additionsglied 25 wird das Kompensationssignal y von dem interpolierten Spracheingabesignal v abgezogen und das Differenzsignal d an die Dezimatoreinrichtung 70 weitergeleitet.

In der Dezimatoreinrichtung 70 wird das Differenzsignal d durch das Ausgleichsfilter 80 in noch zu beschreibender Weise gefiltert und dem Abtastratenerniedriger 82 zugeführt. Dieser verringert die Abtastrate bzw. verlängert die Abtastperiode des gefilterten Differenzsignals d um den Faktor M, indem er die M-1 Zwischenwerte zwischen den regulären Abtastwerten ausblendet. Der Abtastratenerniedriger 82 leitet schließlich das auf diese Weise ermittelte Nutzsignal t an die Spracherkennungseinrichtung 14 weiter. Das Nutzsignal t ist wie das Ansagesignal An und das Spracheingabesignal Sp mit der vorgegebenen niedrigen Abtastrate abgetastet, d.h. der zeitliche Abstand zwischen zwei aufeinanderfolgenden Abtastwerten ist gleich der vorgegebenen langen Abtastperiode. Der Spracherkennungseinrichtung 14 steht mit dem Nutzsignal t ein digitales Signal der von dem Ansageecho befreiten Spracheingabe zur Verfügung. In der Spracherkennungseinrichtung 14 kann so in bekannter Weise der relevante Nachrichteninhalt aus der Spracheingabe gewonnen werden.

Die erste Interpolationseinrichtung 64 und die zweite Interpolationseinrichtung 66 können für die Verwendung in dem Ansagesystem 10 nach Figur 15 identisch aufgebaut sein. Aus diesem Grunde wird im folgenden an Hand der Figuren 16, 17 und 19 der Aufbau und die Funktionsweise der ersten Interpolationseinrichtung 64 erläutert, ohne nochmals auf die zweite Interpolationseinrichtung 66 einzugehen. Für die zweite Interpolationseinrichtung 66 gilt das für die erste Interpolationseinrichtung 64 Erläuterte entsprechend. In den Figur 16, 17 und 19 sind zusätzlich die Bezugszeichen der zweiten Interpolationseinrichtung 64 eingetragen.

In Figur 16 sind die erste Interpolationseinrichtung 64 und die Dezimatoreinrichtung 70 dargestellt. Wie eingangs erwähnt, ist die erste Interpolationseinrichtung 64 durch das erste Dekorrelationsfilter 74 und den vorgeschalteten Abtastratenerhöher 72 gegeben. Der Abtastratenerhöher 72 erhöht die Abtastrate des Ansagesignals An um den vorgegebenen Faktor M, indem er M-1 Null-Werte zwischen zwei aufeinanderfolgenden, regulären Abtastwerten einfügt, und erzeugt so das modifizierte Ansagesignal Anm. Das erste Dekorrelationsfilter 74 enthält M parallel angeordnete Dekorrelationsteilfilter $IFT_0$ bis $IFT_{M-1}$, denen das modifizierte Ansagesignal Anm zugeführt wird. Jedes der Dekorrelationsteilfilter $IFT_0$ bis $IFT_{M-1}$ kann in "gedächtnislose" Netzwerke $N_0'$ bis $N'_{M-1}$ und Verzögerungseinheiten $VE'_0$ bis $VE'_{M-1}$ unterteilt werden. Unter gedächtnislosen Netzwerken sind im folgenden Netzwerke zu verstehen, die Additionsglieder und Multiplikationsglieder, aber keine Verzögerungsglieder enthalten können.

Die Verzögerungseinheiten $VE'_0$ bis $VE'_{M-1}$ verzögern das modifizierte Ansagesignal Anm um die lange Abtastperiode oder ein Vielfaches der langen Abtastperiode. Die lange Abtastperiode ist das M-fache der kurzen Abtastperiode T. Die Ausgänge der Interpolationsteilfilter $IFT_0$ bis $IFT_{M-1}$ sind über eine Reihenanordnung miteinander verbunden, in der M-1 Verzögerungsglieder $VG_0$ bis $VG_{M-2}$ und M Additionsglieder $AD_0$ bis $AD_{M-1}$ in alternierender Folge angeordnet sind. Die Ausgänge der ersten M-2 Dekorrelationsteilfilter $IFT_0$ bis $IFT_{M-2}$ sind jeweils mit dem entsprechenden Additionsglied $AD_0$ bis $AD_{M-2}$ verbunden, während der Ausgang des letzten Dekorrelationsteilfilters $IFT_{M-1}$ auf das Verzögerungsglied $VG_{M-2}$ geschaltet ist. Die Verzögerungsglieder $VG_0$ bis $VG_{M-2}$ sorgen jeweils für eine der kurzen Abtastperiode T entsprechende Signalverzögerung. Über das erste Additionsglied $AD_0$ gibt das erste Dekorrelationsfilter 74 das interpolierte, d.h. das in der Abtastrate erhöhte und zumindest teilweise dekorrelierte Ansagesignal x aus.

Der eben erläuterte Aufbau des ersten Dekorrelationsfilters 30 spiegelt sich in der Beziehung (5) wieder, in der angegeben ist, wie sich die Übertragungsfunktion H' des ersten Dekorrelationsfilters aus den Übertragungsfunktionen $H'_i$ der Dekorrelationsteilfilter $IFT_0$ bis $IFT_{M-1}$ zusammensetzt:

$$(5) \quad H'(z) = \sum_{i=0}^{M-1} z^{-i} H'_i(z^M),$$

mit $z=e^{j\omega T}$, worin $\omega$ die Kreisfrequenz, T die der hohen Abtastrate entsprechende kurze Abtastperiode und j die imaginäre Einheit sind.

Das mit der hohen Abtastrate abgetastete, modifizierte Ansagesignal Anm kann demnach in dem ersten Dekorrelationsfilter 74 im wesentlichen mit der niedrigen Abtastrate verarbeitet werden, da die Dekorrelationsteilfilter $IFT_0$ bis $IFT_{M-1}$ auf der niedrigen Abtastrate betrieben werden. Jede der zwischen zwei regulären Abtastwerten eingefügten M-1 Null-Werte wird von einem der Dekorrelationsteilfilter $IFT_1$ bis $IFT_{M-1}$ entsprechend der zugehörigen Übertragungsfunktion $H'_i$ in einen Zwischenwert umgesetzt, so daß aus dem durch das Einfügen der Null-Werte modifizierten Ansagesignal Anm das interpolierte Ansagesignal x erzeugt wird. Der Grad der gewünschten Dekorrelation kann in Abhängigkeit des bekannten Ansagesignals An über die Übertragungsfunktionen $H'_i$ der Dekorrelationsteilfilter $IFT_0$ bis $IFT_{M-1}$ eingestellt werden.

In Figur 16 ist neben der ersten Interpolationseinrichtung 64 die Dezimatoreinrichtung 70 dargestellt, die aus dem Ausgleichsfilter 80 und dem nachfolgenden Abtastratenerniedriger 82 besteht. Das Ausgleichsfilter 80 enthält in diesem Ausführungsbeispiel nur ein einziges Ausgleichsteilfilter $DFT_0$, das wie die Dekorrelationsteilfilter $IFT_0$ bis $IFT_{M-1}$ der Dekorrelationsfilter 74 und 78 in ein gedächtnisloses Netzwerk $N_0$" und eine Verzögerungseinheit $VE_0$" unterteilt werden kann. Die durch die Verzögerungseinheit $VE_0$" hervorgerufenen Signalverzögerungen entsprechen der langen Abtastperiode, d.h. dem M-fachen der kurzen Abtastperiode T, oder einem Vielfachen davon. Auch das Ausgleichsteilfilter $IFT_0$ wird somit auf der niedrigen Abtastrate betrieben.

Die Übertragungsfunktion $H_0$" des Ausgleichsfilters 80 ist mit der Übertragungsfunktion $H_0$' des ersten Dekorrelationsteilfilters $IFT_0$ der Dekorrelationsfilter 74 und 78 über die Beziehung (6) verknüpft:

$$(6) \quad H_0''(z^M) \cdot H_0'(z^M) = z^{-\alpha},$$

worin $\alpha$ eine nichtnegative Konstante und $H_0$' die Übertragungsfunktion des ersten Dekorrelationsteilfilters

$IFT_0$ des ersten und des zweiten Dekorrelationsfilters 74, 78 bezeichnet, welches die die den ursprünglichen Abtastzeitpunkten zugeordneten Abtastwerte ermittelt.

Nach Gleichung (6) werden für die regulären Abtastwerte des Differenzsignals d, die den ursprünglichen Abtastwerten des Ansagesignals An bzw. des Spracheingabesignals Sp entsprechen, die Signalveränderungen kompensiert, die durch die Übertragung des ersten Dekorrelationsteilfilters $IFT_0$ der Dekorrelationsfilter 74, 78 hervorgerufen worden sind. Durch den Abtastratenerniedriger 82 werden die zwischen zwei aufeinanderfolgenden, regulären Abtastwerten auftretenden M-1 Zwischenwerte des Differenzsignals d ausgeblendet, so daß am Ausgang der Dezimatoreinrichtung 70 das mit der niedrigen Abtastrate abgetastete Nutzsignal t zur Verfügung steht. Die Dezimatoreinrichtung 70 sorgt demnach dafür, daß die Abtastwerte des Nutzsignals t durch die Maßnahmen zur Abtastratenerhöhung und Dekorrelation nicht verfälscht werden, d.h. daß sich das Spracheingabesignal abgesehen von der angestrebten Echounterdrückung nach erfolgter Interpolation und anschließender Abtastratenverringerung so darstellt wie vorher.

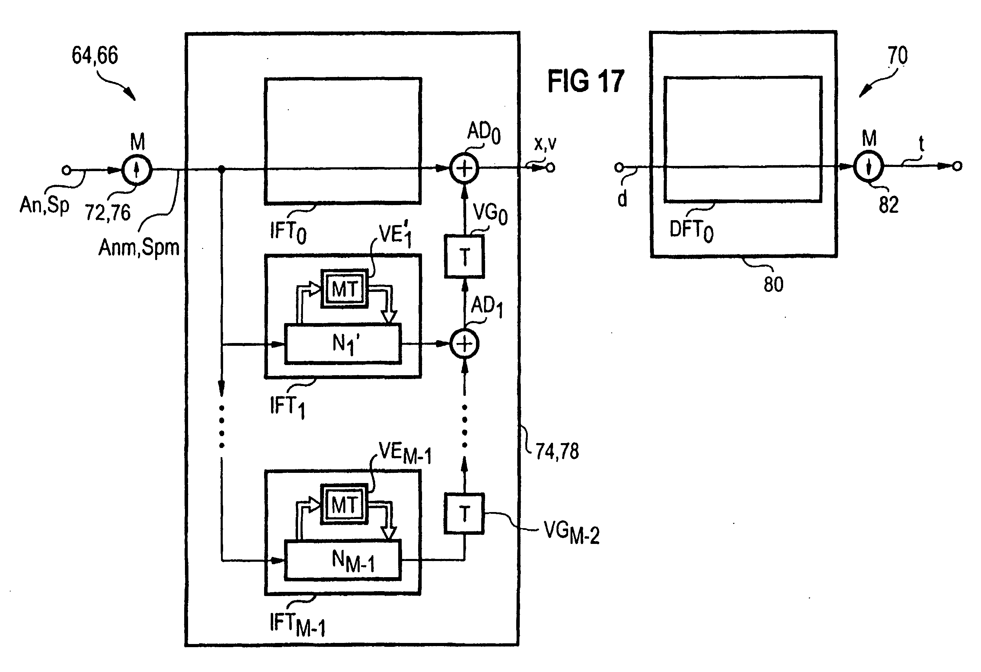

In Figur 17 sind die erste bzw. zweite Interpolationseinrichtung 64 bzw. 68 und die entsprechende Dezimatoreinrichtung 70 für ein Ausführungsbeispiel dargestellt, bei dem das erste Dekorrelationsteilfilter $IFT_0$ ein einfaches Durchgangsfilter ist, welches das modifizierte Ansagesignal Anm bzw. Spracheingabesignal Spm dem Additionsglied $AD_0$ ohne Veränderungen zuführt. In diesem Fall ist auch das Ausgleichsteilfilter $DFT_0$ ein einfaches Durchgangsfilter. Nach Beziehung (7) sind die Übertragungsfunktion $H_0$' des ersten Dekorrelationsteilfilters $IFT_0$ und die Übertragungsfunktion $H_0$" des Ausgleichsteilfilters $DFT_0$ gleich Eins:

$$(7) \quad H_0'(z^M) = H_0''(z^M) =$$

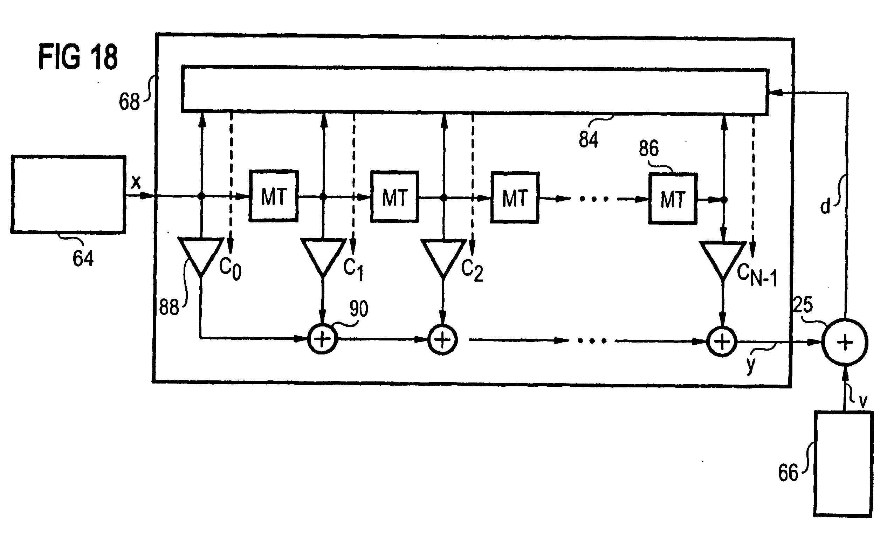

Der Aufbau und die Funktionsweise des adaptiven Echounterdrückungsfilters 68 wird im folgenden an Hand der Figur 18 näher erläutert. Das Echounterdrückungsfilter 68 erzeugt aus dem interpolierten Ansagesignal x, das ihm von der ersten Interpolationseinrichtung 64 zugeführt wird, das Kompensationssignal y. Das Kompensationssignal y basiert auf N Filterkoeffizienten $c_0$ bis $c_{N-1}$, die eine Adaptionseinheit 84 des Echounterdrückungsfilters 68 liefert. Die Adaptionseinheit 84 ermittelt die N Filterkoeffizienten $c_0$ bis $c_{N-1}$ nach dem LMS-Algorithmus in Abhängigkeit des Differenzsignals d, das in dem Additionsglied 25 aus dem Kompensationssignal y und dem interpolierten Spracheingabesignal v gebildet wird.

Das Echounterdrückungsfilter 68 enthält eine Verzögerungskette mit N-1 Verzögerungsgliedern 86, die das interpolierte Ansagesignal x jeweils um die lange Abtastperiode, d.h. um das M-fache der kurzen Abtastperiode T, verzögern. Von der Verzögerungskette abzweigend sind N Multiplikationsglieder 88 parallel angeordnet, die durch die Adaptionseinheit 84 jeweils mit einem der N Filterkoeffizienten $c_0$ bis $c_{N-1}$ angesteuert werden. Die Ausgänge der Multiplikationsglieder 88 sind über eine Reihenanordnung von N-1 Additionsgliedern 90 miteinander verknüpft. Das letzte Additionsglied der Reihenanordnung, das mit dem über den Filterkoeffizienten $c_{N-1}$ angesteuerten Multiplikationsglied verbunden ist, leitet das Kompensationssignal y dem Additionsglied 25 zu.

Die Filterkoeffizienten $c_0$ bis $c_{N-1}$ werden in der Adaptionseinheit 84 nach dem LMS-Algorithmus bestimmt. Dazu wird in der Zeit, in der die Ansage allein auftritt, d.h. in der keine "double talking"-Bedingungen herrschen, im wesentlichen das Betragsquadrat des Differenzsignals d, das die Abweichung des Kompensationssignals y von dem interpolierten Spracheingabesignal v angibt, durch Anpassen der Filterkoeffizienten $c_0$ bis $c_{N-1}$ minimiert. Da die Verzögerungsglieder 86 der Verzögerungskette jeweils eine Signalverzögerung entsprechend der langen Abtastperiode hervorrufen, gehen in einen einzelnen Abtastwert des Kompensationssignals y nur solche mit den Filterkoeffizienten $c_0$ bis $c_{N-1}$ gewichteten Abtastwerte des interpolierten Eingangssignals x ein, deren zeitlicher Abstand durch die lange Abtastperiode gegeben ist. Innerhalb einer langen Abtastperiode werden so in der Adaptionseinheit 84 M Adaptionsschritte vollzogen. Werden beim ersten Adaptionsschritt innerhalb der langen Abtastperiode nur reguläre Abtastwerte des interpolierten Eingabesignals x berücksichtigt, so gehen bei den folgenden M-1 Adaptionsschritten nur Abtastwerte in die Bestimmung der Filterkoeffizienten $c_0$ bis $c_{N-1}$ ein, die durch die Abtastratenerhöhung und die Dekorrelation des Eingangssignals An erzeugt worden sind. Entsprechendes gilt für das interpolierte Spracheingabesignal v.

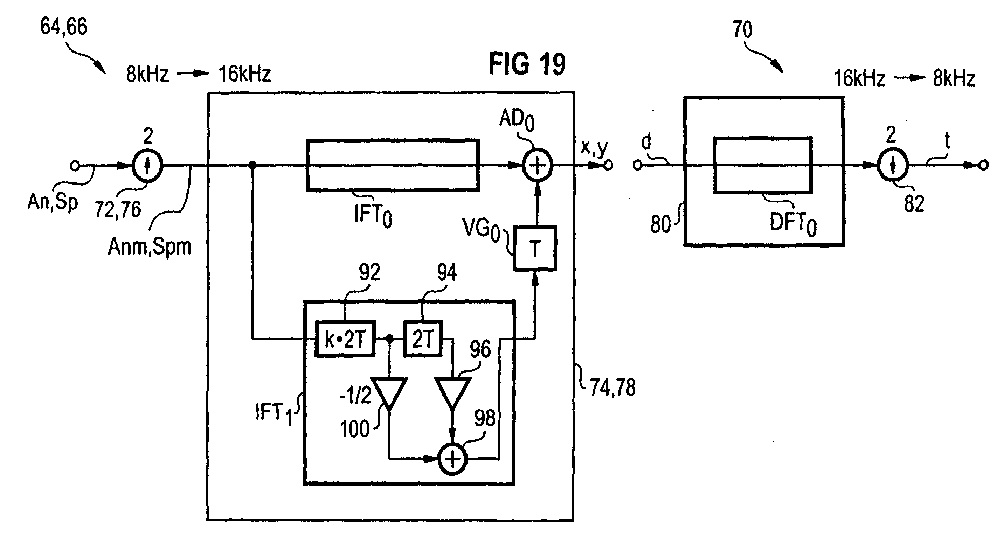

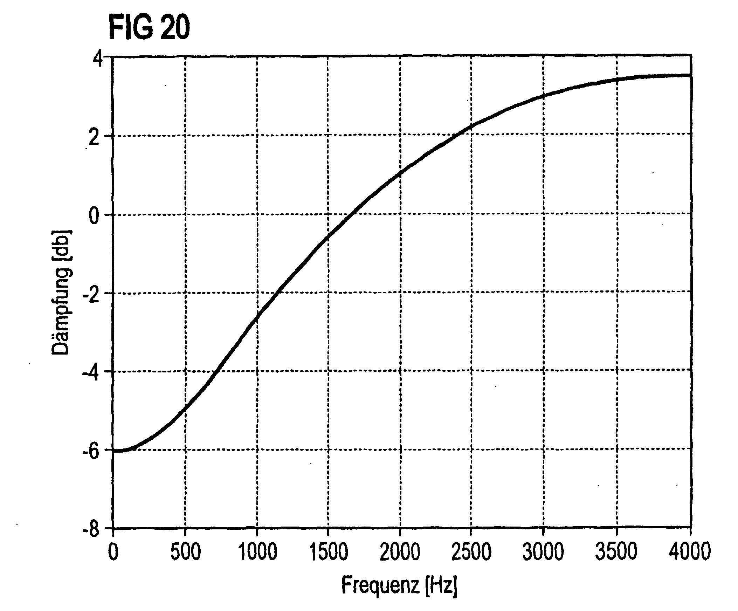

Im folgenden wird die Echounterdrückungseinrichtung 18 an Hand konkreter Ausführungsbeispiele erläutert. Zudem werden an einem Beispiel ihre Vorteile gegenüber dem Stand der Technik illustriert. In Figur 19 sind die erste Interpolationseinrichtung 64 und die Dezimatoreinrichtung 70 für ein Beispiel dargestellt, in dem eine Abtastratenerhöhung um den Faktor M gleich zwei vorgenommen wird. Wie schon bei der Erläuterung der Figuren 16 und 17 erwähnt, ist die zweite Interpolationseinrichtung 66 ebenso aufgebaut wie die erste Interpolationseinrichtung 64, so daß das im folgenden hinsichtlich des Ansagesignals An Erläuterte entsprechend für das Spracheingabesignal Sp gilt. Die Interpolationseinrichtung 64 hat die Aufgabe, das Ansagesignal An zwischen aufeinanderfolgenden regulären Abtastwerten derart zu interpolieren, daß die in Figur 20 dargestellte Färbung der Ansage möglichst weitgehend kompensiert wird. In Figur 20 ist der Frequenzverlauf der Dämpfung aufgetragen, wie er sich typischerweise für menschliche Sprache und damit für die Ansage und die Spracheingabe darstellt. Der in Figur 20 gezeigte Verlauf zeigt die Eigenschaften einer sogenannten Tiefpaß-Färbung.

Da der Faktor M in dem Ausführungsbeispiel nach Figur 19 gleich zwei ist, enthält das Dekorrelationsfilter 74, 78 die beiden Dekorrelationsteilfilter $IFT_0$ und $IFT_1$. Das erste Dekorrelationsteilfilter $IFT_0$ ist als einfaches Durchgangsfilter ausgebildet, dessen Übertragungsfunktion $H'_0$ durch Beziehung (7) gegeben ist. Das Ausgleichsfilter 80 enthält nur ein Ausgleichsteilfilter $DFT_0$, das entsprechend der Beziehung (7) ebenfalls als Durchgangsfilter ausgebildet ist. Das erste Dekorrelationsteilfilter $IFT_1$ enthält ein Verzögerungsglied 92, das eine k-fache Signalverzögerung der zweifachen kurzen Abtastperiode T hervorruft. k ist dabei eine ganze, nichtnegative Zahl. Dem Verzögerungsglied 92 schließt sich ein Verzögerungsglied 94, das eine Signalverzögerung der zweifachen kurzen Abtastperiode erzeugt, und ein Multiplikationsglied 96 an, dessen Ausgang auf den Eingang eines Additionsgliedes 98 führt. Zwischen den Verzögerungsgliedern 52 und 54 ist abzweigend ein Multiplikationsglied 100 vorgesehen, dessen Ausgang ebenfalls auf das Additionsglied 98 geführt ist.

Für das nach Figur 20 spezifizierte Ansagesignal ist der Multiplikationsfaktor des Multiplikationsgliedes 96 mit 1 und der Multiplikationsfaktor des Multiplikationsgliedes 100 mit -1/2 angesetzt. Die Übertragungsfunktion $H'_1$ des in Figur 19 dargestellten Dekorrelationsteilfilters ist geeignet, die in Figur 20 dargestellte Färbung der Ansage bzw. der Spracheingabe weitgehend aufzuheben. Die Effizienz, mit der dies möglich ist, hängt von der Konstante k ab, wie weiter unten gezeigt wird. Die Multiplikationsglieder 96, 100 sind in den Figuren 16 und 17 als gedächtnisloses Netzwerk $N_1'$ bezeichnet, während die Verzögerungsglieder 92, 94 in diesen Figuren der Verzögerungseinheit $VE_1'$ entsprechen.

Das Ansagesignal An bzw. das Spracheingabesignal Sp wird zunächst dem Abtastratenerhöher 72 bzw. 76 zugeführt, der das modifizierte, in der Abtastrate erhöhte Ansagesignal Anm bzw. Spracheingabesignal Spm erzeugt. Bei dem erläuterten Beispiel können das Ansagesignal An und das Spracheingabesignal Sp mit einer der niedrigen Abtastrate entsprechenden Abtastfrequenz von z.B. 8 kHz abgetastet sein. Der Abtastratenerhöher 72 bzw. 76 erhöht somit die Abtastfrequenz auf 16 kHz. Das modifizierte Ansagesignal Anm bzw. Spracheingabesignal Spm werden nun in einem ersten Verarbeitungszweig durch das erste Dekorrelationsteilfilter $IFT_0$ und in einem zweiten Verarbeitungszweig durch das zweite Dekorrelationsfilter $IFT_1$ verarbeitet. An dem Additionsglied $AD_0$ werden die beiden Ausgangssignale des ersten Dekorrelationsteilfilters $IFT_0$ und des zweiten Dekorrelationsteilfilters $IFT_1$, die durch das Verzögerungsglied $VG_0$ um eine kurze Abtastperiode zeitlich zueinander verschoben sind, addiert und als interpoliertes Ansagesignal x bzw. als interpoliertes Spracheingabesignal ausgegeben.

Das Differenzsignal d wird von dem Ausgleichsfilter 80 unverändert an den Abtastratenerniedriger 82 weitergeleitet. Dieser führt in diesem Ausführungsbeispiel die notwendige Halbierung der Abtastfrequenz von 16 kHz auf 8 kHz durch, indem er jeden zweiten Abtastwert des Differenzsignals d ausblendet. Das auf diese Weise erzeugte Nutzsignal t, das wie das Ansagesignal An und das Spracheingabesignal Sp mit der Abtastfrequenz von 8 kHz abgetastet ist, wird der Spracherkennungseinheit 14 zugeführt.

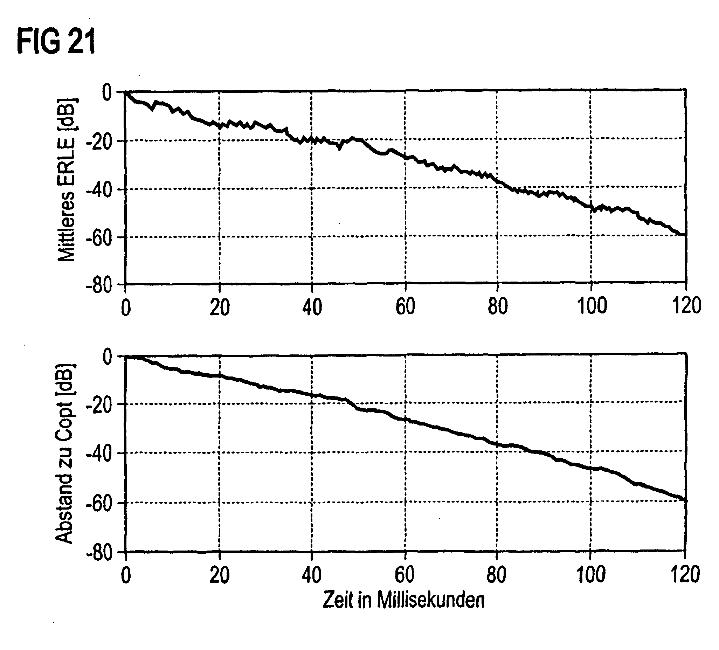

Im folgenden werden an Hand der Figuren 21 bis 23 zwei Ausführungsbeispiele der erfindungsgemäßen Echounterdrückungseinrichtung mit einem Echounterdrückungsfilter nach dem Stand der Technik hinsichtlich ihrer Konvergenzeigenschaften verglichen. Die Anzahl N der Filterkoeffizienten $c_0$ bis $c_{N-1}$ ist sowohl für die beiden Ausführungsbeispiele der Erfindung als auch für das bekannte Echounterdrückungsfilter mit 64 angesetzt. Als Maß für die Konvergenz der Koeffizientenadaption, d.h. für die Geschwindigkeit, mit welcher der aktuelle Satz der 64 Filterkoeffizienten an einen optimalen Satz angepaßt wird, werden im folgenden zwei Größen verwendet, nämlich die mittlere Dämpfung ERLE, "Error Return Loss Enhancement", des Echopfades EP und die Abweichung eines die aktuellen Filterkoeffizienten zusammenfassenden Koeffizientenvektors von einem optimalen Koeffizientenvektor Copt, durch den die optimalen Filterkoeffizienten gegeben sind.

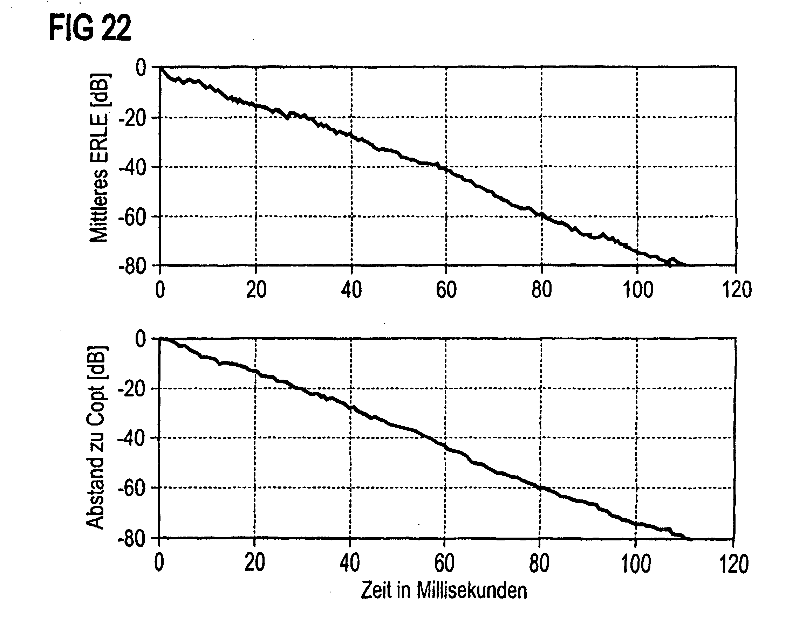

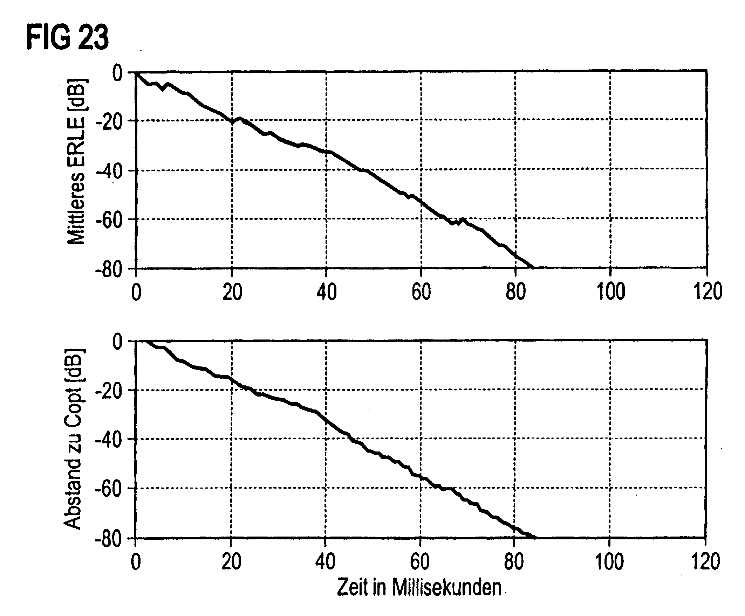

Figur 21 illustriert das Konvergenzverhalten eines konventionellen Echounterdrückungsfilters, das nach dem LMS-Algorithmus arbeitet. Bei der konventionellen Echokompensation wird keine Abtastratenerhöhung und Dekorrelation des Ansagesignals und des Spracheingabesignals vorgenommen. Zum Vergleich ist in Figur 22 das Konvergenzverhalten der Digitalfiltereinrichtung nach Figur 19 dargestellt, in der die Konstante k des Verzögerungsgliedes 92 für dieses Ausführungsbeispiel mit 0 angesetzt ist. Der zeitliche Verlauf der mittleren Dämpfung ERLE des Echopfades EP und der Abweichung von dem optimalen Koeffizientenvektor Copt spiegeln das deutlich verbesserte Konvergenzverhalten der erfindungsgemäßen Digitalfiltereinrichtung wieder. Wird die Konstante k vergrößert, z.B. so, daß sie größer oder gleich der halben Anzahl der Filterkoeffizienten ist, so kann das Konvergenzverhalten der Digitalfiltereinrichtung nochmals deutlich verbessert werden. In Figur 23 ist das Konvergenzverhalten eines Ausführungsbeispiels der Digitalfiltereinrichtung nach Figur 19 dargestellt, in welcher die Konstante k auf 32 gesetzt ist. Durch diese Maßnahme wird die Korrelation zwischen aufeinanderfolgenden Abtastwerten des interpolierten Eingangssignals x und zwischen aufeinanderfolgenden Abtastwerten des interpolierten Spracheingabesignals v weiter reduziert, so daß die Adaption der Filterkoeffizienten im Rahmen des LMS-Algorithmus deutlich schneller vollzogen werden kann.

**Patentansprüche**

1.  Verfahren zum Steuern eines Ansagesystems (10),

    -   bei dem durch eine Ansageeinrichtung (12) eine Ansage in Form eines digitalen Ansagesignals (An) erzeugt wird,
    -   bei dem durch eine Detektoreinrichtung (16) eine zeitliche Überlagerung der Ansage und einer Spracheingabe erfaßt wird,
    -   bei dem in Fällen, in denen eine zeitliche Überlagerung. detektiert wird, ein Kompensationssignal (y), durch das ein in einem digitalen Spracheingabesignal (Sp) enthaltenes Ansageecho nachgebildet wird, in einem adaptiven, digitalen Echounterdrückungsfilter (68) ermittelt wird, dessen Filterkoeffizienten ($C_0$ bis $c_{N-1}$) bis zu einem Zeitpunkt adaptiert werden, zu. dem eine zeitliche Überlagerung von Ansage und Spracheingabe erfaßt wird,
    -   und bei dem ein Differenzsignal (d, t) aus Spracheingabesignal (Sp, v) und Kompensationssignal (y) von einer Spracherkennungseinrichtung (14) verarbeitet wird.

2.  Verfahren nach Anspruch 1, **dadurch gekennzeichnet, daß** die Adaption der Filterkoeffizienten nach einem Verfahren zur Minimierung der mittleren Fehlerquadrate durchgeführt wird.

3.  Verfahren nach einem der vorhergehenden Ansprüche, **dadurch gekennzeichnet, daß** die zeitliche Überlagerung von Ansage und Spracheingabe durch die Detektoreinrichtung (16) erfaßt wird, der das Ansagesignal (An) und das Spracheingabesignal (Sp) zugeführt werden und die ein Detektorsignal (Dt) erzeugt.

4.  Verfahren nach Anspruch 3, **dadurch gekennzeichnet, daß** das Echounterdrückungsfilter (68) durch das Detektorsignal (Dt) angesteuert wird und das Kompensationssignal (y) und das Spracheingabesignal (Sp, v) einem Additionsglied (25) zugeführt werden, welches das Differenzsignal (d) ermittelt und dieses an die Spracherkennungseinrichtung (14) und an das Echounterdrückungsfilter (68) abgibt.

5.  Verfahren nach einem der vorhergehenden Ansprüche, **dadurch gekennzeichnet, daß** das Ansagesignal (An) gedämpft wird, wenn eine zeitliche Überlagerung von Ansage und Spracheingabe festgestellt wird.

6.  Verfahren nach Anspruch 5, **dadurch gekennzeichnet, daß** das Ansagesignal (An) stufenweise gedämpft wird.

**7.** Verfahren nach Anspruch 5 oder 6, **dadurch gekennzeichnet, daß** eine Dämpfungsvorrichtung (20) durch das Detektorsignal (Dt) angesteuert wird und einem Multiplikationsglied (22) mindestens einen Dämpfungsfaktor (a) zuführt, mit dem das Ansagesignal (An) multipliziert wird.

**8.** Ansagesystem zum Durchführen des Verfahrens nach einem der Ansprüche 1 bis 7, mit

- einer Ansageeinrichtung (12) zum Erzeugen einer Ansage in Form eines digitalen Ansagesignals (An),
- einer Detektoreinrichtung (16) zum Erfassen einer zeitlichen Überlagerung der Ansage und einer Spracheingabe,
- einem adaptiven, digitalen Echounterdrükkungsfilter (68), das in Fällen, in denen eine zeitliche Überlagerung detektiert wird, ein Kompensationssignal (y) ermittelt, durch das ein in einem digitalen. Spracheingabesignal (Sp) enthaltenes Ansageecho nachgebildet wird, und dessen Filterkoeffizienten ($c_0$ bis $c_{N-1}$) bis zu einem Zeitpunkt adaptiert werden, zu dem eine zeitliche Überlagerung von Ansage und Spracheingabe erfaßt wird, und
- einer Spracherkennungseinrichtung (14) zum Verarbeiten eines Differenzsignals (d) aus Spracheingabesignal (Sp) und Kompensationssignal (y).

**9.** Ansagesystem nach Anspruch 8, **dadurch gekennzeichnet, daß** das Echounterdrückungsfilter (68) ein nach einem Verfahren zur Minimierung der mittleren Fehlerquadrate arbeitendes, adaptives Digitalfilter ist.

**10.** Ansagesystem nach Anspruch 8 oder 9, **dadurch gekennzeichnet, daß** der Detektoreinrichtung (16) das Ansagesignal (An) und das Spracheingabesignal (Sp) zugeführt werden und sie ein Detektorsignal (Dt) erzeugt.

**11.** Ansagesystem nach Anspruch 10, **dadurch gekennzeichnet, daß** die Detektoreinrichtung (16) mit dem Echounterdrückungsfilter (68) verbunden ist und dieses durch das Detektorsignal (Dt) ansteuert und daß das Echounterdrückungsfilter (68) mit einem der Spracherkennungseinrichtung (14) vorgeschalteten Additionsglied (25) verbunden ist, dem das Kompensationssignal (y) und das Spracheingabesignal (Sp) zugeführt werden und welches das Differenzsignal (d) ermittelt und dieses an die Spracherkennungseinrichtung (14) und das Echounterdrückungsfilter (68) ausgibt.

**12.** Ansagesystem nach Anspruch 10 oder 11, **gekennzeichnet durch** eine mit der Detektoreinrichtung (16) verbundene Dämpfungsvorrichtung (20), die **durch** das Detektorsignal (Dt) angesteuert wird und bei einer zeitlichen Überlagerung von Ansage und Spracheingabe einem mit ihr verbundenen Multiplikationsglied (22) mindestens einen Dämpfungsfaktor (a) zuführt, mit dem das Ansagesignal (An) multipliziert wird.

## Claims

**1.** Method for controlling an announcement system (10),

- in which an announcement in the form of a digital announcement signal (An) is generated by means of an announcement device (12),
- in which a chronological overlap of the announcement and of a speech input is sensed by means of a detector device (16),
- in which, in cases in which a chronological overlap is detected, a compensation signal (y) by means of which an announcement echo contained in a digital speech input signal (Sp) is simulated, is determined in an adaptive, digital echo suppression filter (68) whose filter coefficients ($c_0$ to $c_{N-1}$) are adapted up to a time at which a chronological overlap of the announcement and speech input is sensed,
- and in which a difference signal (d, t) formed from the speech input signal (Sp, v) and the compensation signal (y) is processed by a speech recognition device (14).

**2.** Method according to Claim 1, **characterized in that** the adaptation of the filter coefficients is carried out according to a method for minimizing the mean square error.

**3.** Method according to one of the preceding claims, **characterized in that** the chronological overlap of the announcement and speech input is sensed by means of the detector device (16) to which the announcement signal (An) and the speech input signal (Sp) are fed, and which generates a detector signal (Dt).

**4.** Method according to Claim 3, **characterized in that** the echo suppression filter (68) is actuated by means of the detector signal (Dt), and the compensation signal (y) and the speech input signal (Sp, v) are fed to an adder element (25) which determines the difference signal (d) and outputs it to the speech recognition device (14) and to the echo suppression filter (68).

**5.** Method according to one of the preceding claims, **characterized in that** the announcement signal (An) is damped if a chronological overlap of the announcement and speech input is detected.

**6.** Method according to Claim 5, **characterized in that** the announcement signal (An) is damped incrementally.

**7.** Method according to Claim 5 or 6, **characterized in that** a damping device (20) is actuated by means of the detector signal (Dt) and feeds, to a multiplier element (22), at least one damping factor (a) by which the announcement signal (An) is multiplied.

**8.** Announcement system for carrying out the method according to one of Claims 1 to 7, having

- an announcement device (12) for generating an announcement in the form of a digital announcement signal (An),
- a detector device (16) for sensing a chronological overlap between the announcement and a speech input,
- an adaptive, digital echo suppression filter (68) which, in cases in which a chronological overlap is detected, determines a compensation signal (y) by means of which an announcement echo contained in a digital speech input signal (Sp) is simulated, and whose filer coefficients ($c_0$ to $c_{N-1}$) are adapted up to a time at which a chronological overlap of the announcement and speech input is sensed, and
- a speech recognition device (14) for processing a difference signal (d) formed from the speech input signal (Sp) and compensation signal (y).

**9.** Announcement system according to Claim 8, **characterized in that** the echo suppression filter (68) is an adaptive digital filter which operates according to a method for minimizing the mean square error.

**10.** Announcement system according to Claim 8 or 9, **characterized in that** the announcement signal (An) and the speech input signal (Sp) are fed to the detector device (16) and it generates a detector signal (Dt).

**11.** Announcement system according to Claim 10, **characterized in that** the detector device (16) is connected to the echo suppression filter (68) and the latter is actuated by means of the detector signal (Dt), and **in that** the echo suppression filter (68) is connected to an adder element (25) which is connected upstream of the speech recognition device (14) and to which the compensation signal (y) and the speech input signal (Sp) are fed and which determines the difference signal (d) and outputs it to the speech recognition device (14) and to the echo suppression filter (68).

**12.** Announcement system according to Claim 10 or 11, **characterized by** a damping device (20) which is connected to the detector device (16) and is actuated by means of the detector signal (Dt), and when there is a chronological overlap of the announcement and speech input it feeds, to a multiplier element (22) connected to it, at least one damping factor (a) by which the announcement signal (An) is multiplied.

**Revendications**

**1.** Procédé de pilotage d'un système d'annonces enregistrées (10),

- dans lequel une annonce sous forme d'un signal d'annonce numérique (An) est générée par un dispositif d'annonce,
- dans lequel une superposition temporelle de l'annonce et d'une entrée vocale est décelée par un dispositif de détection (16),
- dans lequel, dans les cas où une superposition temporelle est détectée, un signal de compensation (y) simulant un écho d'annonce contenu dans un signal d'entrée vocale numérique (Sp) est déterminé dans un filtre numérique adaptatif de suppression d'écho (68), dont les coefficients de filtrage ($C_0$ à $C_{N-1}$) sont adaptés jusqu'à un moment auquel une superposition temporelle de l'annonce et de l'entrée vocale est détectée,
- et dans lequel un signal de différence (d, t) entre le signal d'entrée vocale (Sp, v) et le signal de compensation (y) est traité par un dispositif de reconnaissance vocale (14).

**2.** Procédé selon la revendication 1 **caractérisé en ce que** l'adaptation des coefficients de filtrage est réalisée selon un procédé de minimisation des quadratiques moyennes des erreurs.

**3.** Procédé selon l'une quelconque des revendications précédentes, **caractérisé en ce que** la superposition temporelle de l'annonce et de l'entrée vocale est décelée par le dispositif de détection (16) auquel le signal d'annonce (An) et le signal d'entrée vocale (Sp) sont amenés et laquelle génère un signal de détection (Dt).

**4.** Procédé selon la revendication 3, **caractérisé en ce que** le filtre de suppression d'écho (68) est activé par le signal de détection (Dt) et le signal de compensation (y) ainsi que le signal d'entrée vocale (Sp, v) sont amenés à une cellule d'addition (25) qui détermine le signal de différence (d) et qui délivre ce dernier au dispositif de reconnaissance vocale (14) et au filtre de suppression d'écho (68).

5. Procédé selon l'une quelconque des revendications précédentes,
**caractérisé en ce que**
le signal d'annonce (An) est amorti, lorsqu'une superposition temporelle de l'annonce et de l'entrée vocale est constatée.

6. Procédé selon la revendication 5,
**caractérisé en ce que**
le signal d'annonce (An) est amorti graduellement.

7. Procédé selon l'une quelconque des revendications 5 ou 6,
**caractérisé en ce que**
un dispositif amortisseur (20) est activé par le signal de détection (Dt) et amène vers une cellule de multiplication (22) au moins un coefficient d'amortissement (a), par lequel le signal d'annonce (An) est multiplié.

8. Système d'annonces enregistrées pour la réalisation du procédé selon l'une quelconque des revendications 1 à 7, avec

- un dispositif d'annonce (12) pour générer une annonce sous forme d'un signal d'annonce numérique (An),
- un dispositif de détection (16) pour déceler une superposition temporelle de l'annonce et d'une entrée vocale,
- un filtre de suppression d'écho numérique adaptatif (68), qui dans les cas où une superposition temporelle est détectée, détermine un signal de compensation (y), grâce auquel un écho d'annonce contenu dans un signal numérique d'entrée vocale (Sp) est simulé et dont les coefficients de filtrage ($C_0$ à $C_{N-1}$) sont adaptés jusqu'à un moment où une superposition temporelle de l'annonce et de l'entrée vocale est décelée et
- un dispositif de reconnaissance vocale (14) pour le traitement d'un signal de différence (d) entre un signal d'entrée vocale (Sp) et un signal de compensation (y).

9. Système d'annonces enregistrées selon la revendication 8,
**caractérisé en ce que**
le filtre de suppression d'écho (68) est un filtre numérique adaptatif, fonctionnant selon un procédé de minimisation des quadratiques moyennes des erreurs.

10. Système d'annonces enregistrées selon l'une quelconque des revendications 8 ou 9,
**caractérisé en ce que**
le signal d'annonce (An) et le signal d'entrée vocale (Sp) sont amenés au dispositif de détection (16) et ce dernier génère un signal de détection (Dt).

11. Système d'annonces enregistrées selon la revendication 10,
**caractérisé en ce que**
le dispositif de détection (16) est relié au filtre de suppression d'écho (68) et active ce dernier à l'aide d'un signal de détection (Dt) et le filtre de suppression d'écho (68) est relié à une cellule d'addition (25), située en amont du dispositif de reconnaissance vocale (14) et à laquelle le signal de compensation (y) et le signal d'entrée vocale (Sp) sont amenés et laquelle détermine le signal de différence (d) et délivre ce dernier au dispositif de reconnaissance vocale (14) et au filtre de suppression d'écho (68).

12. Système d'annonces enregistrées selon l'une quelconque des revendications 10 ou 11,
**caractérisé par**
un dispositif amortisseur (20) relié au dispositif de détection (16), qui est activé par le signal de détection (Dt) et qui, lors d'une superposition temporelle de l'annonce et de l'entrée vocale amène à une cellule de multiplication (22) à laquelle il est relié, au moins un coefficient d'amortissement (a), par lequel le signal d'annonce (An) est multiplié.

## FIG 1

## FIG 2

FIG 3

FIG 4

**FIG 5**

**FIG 6**

**FIG 7** — Ansage:"Siemens"

**FIG 8** — Spracheingabe:"Mueller"

## FIG 9

## FIG 13

FIG 10

FIG 11

EP 0 902 414 B1

**FIG 12**

Zeit in Sekunden

**FIG 14**

ANSAGE ZURÜCKSETZEN
ANSAGE AUSWÄHLEN
100

WORT
ERKANNT

ANSAGE-MENÜ
EINGESTELLT

NORMALBETRIEB

ANSAGE FREIGEBEN

DÄMPFUNG 0dB

102

ANSAGE-
SEGMENT
EINGESTELLT

ANSAGE
UND
SPRACH-
EINGABE
GLEICHZEITIG

ANSAGE
UND
SPRACH-
EINGABE
NICHT
GLEICHZEITIG

ÜBERWACHUNG
DÄMPFUNG 12dB

ERSTE ZEIT-
SCHALTUNG AN

104

ÜBERWACHUNGS-
DAUER
ABGELAUFEN

ANSAGE
ANHALTEN

ANSAGEPAUSE

UNENDLICHE
DÄMPFUNG

PAUSENDAUER
ABGELAUFEN

LETZTES WORT VOR
ÜBERWACHUNG
SUCHEN

106

108

FIG 15

EP 0 902 414 B1

25

FIG 16

EP 0 902 414 B1

FIG 17

EP 0 902 414 B1

64,66

An,Sp  72,76

Anm,Spm

M

$IFT_0$

$VE_1'$

MT

$N_1'$

$IFT_1$

$VE_{M-1}$

MT

$N_{M-1}$

$IFT_{M-1}$

$AD_0$  x,v

$VG_0$

T

$AD_1$

T

$VG_{M-2}$

74,78

70

M  t

d

$DFT_0$

82

80

FIG 18

EP 0 902 414 B1

FIG 19

FIG 20

EP 0 902 414 B1

FIG 21

FIG 22

FIG 23